# EUROPEAN PATENT SPECIFICATION

(11) **EP 3 489 713 B1**
(45) Date of publication and mention of the grant of the patent: **12.03.2025**
(21) Application number: 16909604.7
(22) Date of filing: 26.11.2016
(51) Int. Cl.: G01S 7/481, G02B 6/30, G01S 17/34, G02F 1/295, G02B 6/124, G02B 26/02, G02B 6/12, G01S 17/931, G02F 1/313

(54) **LIDAR APPARATUS FOR VEHICLE**
LIDAR-VORRICHTUNG FÜR FAHRZEUG
APPAREIL LIDAR DESTINÉ À UN VÉHICULE

(30) Priority: 21.07.2016 KR 20160092621
(43) Date of publication of application: 29.05.2019
(73) Proprietor: LG Electronics Inc., Seoul 07336 (KR)
(72) Inventor: JEONG, Seongyun, Seoul 06772 (KR); LEE, Jejong, Seoul 06772 (KR); JO, Byeongrim, Seoul 06772 (KR)
(74) Representative: Frenkel, Matthias Alexander
(86) International application number: PCT/KR2016/013739
(87) International publication number: WO 2018/016689

(56) References cited:
- JP-A- 2004 333 440
- JP-A- 2004 347 574
- JP-A- 2009 133 674
- US-A1- 2002 085 594
- US-A1- 2015 188 291
- US-A1- 2015 346 340
- VAN ACOLEYEN K ET AL: "Integrated optical beam steerers", OPTICAL FIBER COMMUNICATION CONFERENCE AND EXPOSITION AND THE NATIONAL FIBER OPTIC ENGINEERS CONFERENCE (OFC/NFOEC), 2013, IEEE, 17 March 2013 (2013-03-17), pages 1 - 3, XP032679120, ISBN: 978-1-4799-0457-0, [retrieved on 20130614], DOI: 10.1364/OFC.2013.OTH1B.6
- KAREL VAN ACOLEYEN ET AL: "Two-Dimensional Dispersive Off-Chip Beam Scanner Fabricated on Silicon-On-Insulator", IEEE PHOTONICS TECHNOLOGY LETTERS, IEEE SERVICE CENTER, PISCATAWAY, NJ, US, vol. 23, no. 17, 1 September 2011 (2011-09-01), pages 1270 - 1272, XP011373801, ISSN: 1041-1135, DOI: 10.1109/LPT.2011.2159785

## Description

### BACKGROUND OF THE INVENTION

### 1. Field of the invention

The present invention relates to a lidar apparatus for vehicles.

### 2. Description of the Related Art

A vehicle is an apparatus that moves in a direction desired by a user riding therein. A typical example of the vehicle may be an automobile.

Meanwhile, a variety of sensors and electronic devices have been mounted in vehicles for the convenience of a user of the vehicle. In particular, for user driving convenience, an Advanced Driver Assistance System (ADAS) has been briskly studied. In addition, vigorous efforts are being made to develop autonomous vehicles.

In order to realize an advanced driver assistance system and autonomous vehicles, various kinds of sensors are necessarily required. For example, the sensors include a radar, a lidar, and a camera.

In particular for the lidar, a technology for processing light generated by a light generation unit is needed. There is a necessity to develop optical processing technology in consideration of the loss of light, integration, and the degree of freedom in design.

Meanwhile, in the case in which the lidar is not rotated by a motor, an object is detected only within a predetermined field of view of the lidar. As a result, it is not possible to satisfactorily and flexibly detect an object in the context of a travel situation of a vehicle.

Document US 2015/346340 A1 describes a lidar chip implemented with a frequency-modulated continuous-wave (FMCW) beam from a chirped laser, wherein, in operation, the FMCW beam propagates from the chirped laser to a power divider, which sends a first portion of the FMCW beam to a transmit steering unit and a second portion to a mixer. The steering unit controls a transmit antenna according to signals from the steering control so as to transmit the FMCW beam towards the target, wherein the lidar chip may include more than one transmit antenna arrayed in two dimensions to provide two-dimensional steering.

In document van Acoleyen et al, "Integrated optical beam steerers", Optical Fiber Communication Conference and Exposition and the National Fiber Optic Engineers Conference (OFC/NFOEC), 2013, IEEE, pages 1-3, XP032679120, a photonic-electronic chip using off-chip beam steering for interconnecting, sensing, scanning or data communication is described. A one-dimensional optical phased array with multiple electrodes is disclosed, wherein light entering through an input waveguide is split into sixteen waveguides, each with an individual heater, and, at the grating coupler array, the waveguides taper to a 4 µm wide waveguide, spaced 5 µm, on which a grating is etched with a 630 nm period and fill factor of 0.5.

### SUMMARY OF THE INVENTION

In accordance with the present invention, the above problems are solved by a lidar apparatus for vehicles according to claim 1.

The present invention should not be limited to the aforementioned object, and other not-mentioned objects will be clearly understood by those skilled in the art from the following description.

To solve the aforementioned objects, there is provided a lidar apparatus for vehicles according to claim 1, inter alia including a transmission unit configured to output a beam, and a reception unit configured to acquire reflection light formed as a result of the beam being reflected by an object, wherein the transmission unit comprises a light generation unit configured to generate transmission light that contains the beam, a first beam steering unit configured to steer the beam in a first direction; and a second beam steering unit configured to steer the beam in a second direction.

The details of other embodiments are included in the following description and the accompanying drawings.

The embodiments of the present invention have one or more effects as follows.

First, it is possible to use a single lidar apparatus as an apparatus for a short distance or an apparatus for a long distance, thereby being appropriate for various situations.

Second, it is possible to adaptively use the lidar apparatus based on an advanced driver assistance system (ADAS) that is driven.

Third, it is possible to use a non-motor type lidar apparatus, whereby the lidar apparatus becomes so strong that the lidar apparatus can be used in severe situations, such as detecting high-speed vehicles.

The present invention is not limited to the aforementioned effects, and other effects will be clearly understood by those skilled in the art from the claims.

### BRIEF DESCRIPTION OF THE DRAWINGS

FIG. 1A is a view showing the external appearance of a vehicle according to an embodiment of the present invention;
FIGS. 1B and 1C are reference views for explanation of the practical use of a lidar apparatus for vehicles according to an embodiment of the present invention;
FIG. 2 is a reference block diagram illustrating a vehicle according to the embodiment of the present invention;
FIG. 3 is a block diagram illustrating a lidar apparatus for vehicles according to the embodiment of the present invention;
FIG. 4 is a detailed block diagram illustrating the lidar apparatus for vehicles according to the embodiment of the present invention.
FIG. 5 is a reference block diagram for explanation of transmission light and reception light according to an embodiment of the present invention;
FIG. 6A is a reference view for explanation of a wave guide unit according to an embodiment of the present invention;
FIG. 6B is a reference diagram for explanation of the effects of the wave guide unit according to an embodiment of the present invention;
FIG. 7 is a reference view illustrating an example of a Frequency Modulated Continuous Wave (FMCW) signal according to an embodiment of the present invention;
FIGS. 8A to 8C are diagrams illustrating a transmission frequency and a reception frequency according to an embodiment of the present invention;
FIGS. 9A to 9C are reference views for explanation of a bit frequency according to an embodiment of the present invention;
FIG. 10 is a reference view for explanation of a beam steering unit according to an embodiment of the present invention;
FIGS. 11A to 11D are reference views for explanation of a first beam steering unit according to an embodiment of the present invention.;
FIG. 11E is a reference view for explanation of an emission angle that is changed by heat applied to the wave guide according to an embodiment of the present invention;
FIGS. 12A and 12B are reference views for explanation of a second beam steering unit according to an embodiment of the present invention;
FIGS. 13A to 13C are reference views for explanation of a grating coupler according to an embodiment of the present invention;
FIGS. 13D to 13F are reference diagrams for explanation of the relationship between a duty cycle and intensity of a beam according to an embodiment of the present invention;
FIG. 14 is a reference diagram for explanation of a beam steering unit according to an embodiment of the present invention; and
FIGS. 15A and 15B are reference diagrams for explanation of a lens system according to an embodiment of the present invention.

### DETAILED DESCRIPTION OF THE PREFERRED EMBODIMENTS

Hereinafter, the embodiments disclosed in the present specification will be described in detail with reference to the accompanying drawings, and the same or similar elements are denoted by the same reference numerals even though they are depicted in different drawings and redundant descriptions thereof will be omitted. In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other. In addition, in the following description of the embodiments disclosed in the present specification, a detailed description of known functions and configurations incorporated herein will be omitted when it may make the subject matter of the embodiments disclosed in the present specification rather unclear. In addition, the accompanying drawings are provided only for a better understanding of the embodiments disclosed in the present specification and are not intended to limit the technical ideas disclosed in the present specification.

It will be understood that although the terms "first," "second," etc., may be used herein to describe various components, these components should not be limited by these terms. These terms are only used to distinguish one component from another component.

It will be understood that when a component is referred to as being "connected to" or "coupled to" another component, it may be directly connected to or coupled to another component or intervening components may be present. In contrast, when a component is referred to as being "directly connected to" or "directly coupled to" another component, there are no intervening components present.

As used herein, the singular form is intended to include the plural forms as well, unless the context clearly indicates otherwise.

In the present application, it will be further understood that the terms "comprises", includes," etc. specify the presence of stated features, integers, steps, operations, elements, components, or combinations thereof, but do not preclude the presence or addition of one or more other features, integers, steps, operations, elements, components, or combinations thereof.

A vehicle as described in this specification may include an automobile and a motorcycle. Hereinafter, a description will be given based on an automobile.

A vehicle as described in this specification may include all of an internal combustion engine vehicle including an engine as a power source, a hybrid vehicle including both an engine and an electric motor as a power source, and an electric vehicle including an electric motor as a power source.

In the following description, "the left side of the vehicle" refers to the left side in the forward driving direction of the vehicle, and "the right side of the vehicle" refers to the right side in the forward driving direction of the vehicle.

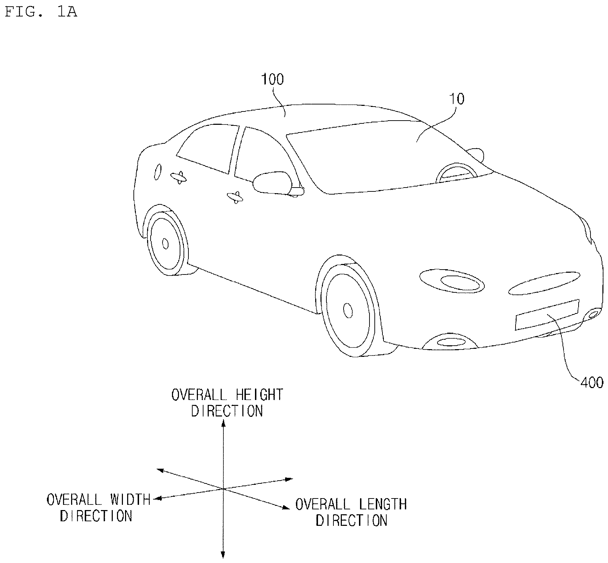

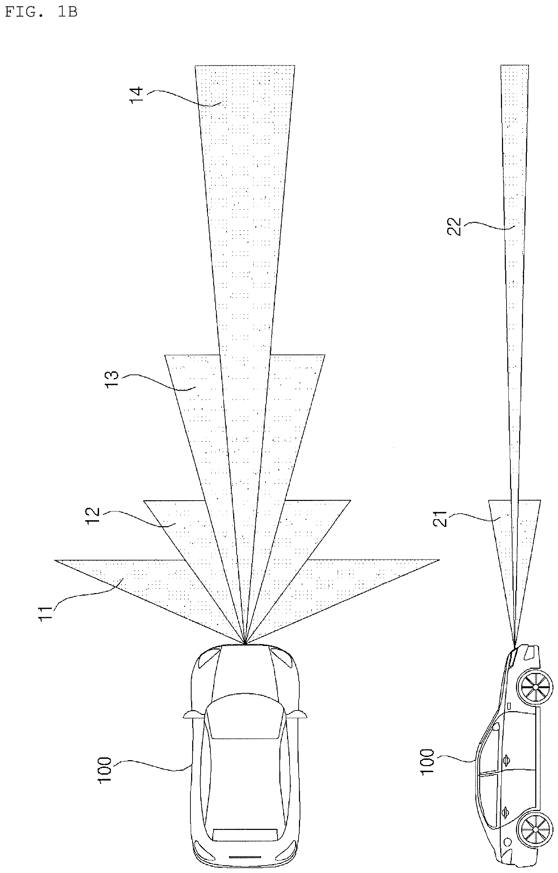

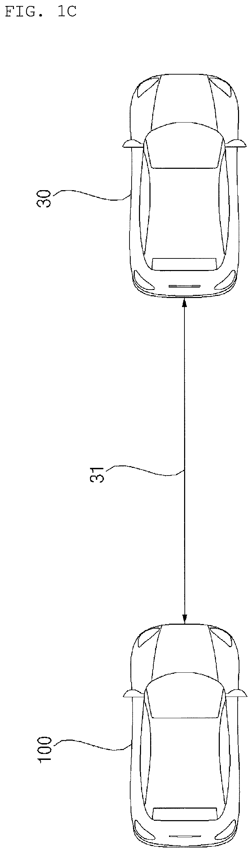

FIG. 1 is a view showing the external appearance of a vehicle according to an embodiment of the present invention.

Referring to FIG. 1, a vehicle 100 may include a plurality of wheels, which are rotated by a power source, and a steering input device for controlling the direction of travel of the vehicle 100.

In some embodiments, the vehicle 100 may be an autonomous vehicle. The autonomous vehicle enables bidirectional switching between an autonomous driving mode and a manual mode in response to a user input. When switched to the manual mode, the autonomous vehicle 100 may receive a steering input through a steering input device.

The vehicle 100 may include an advanced driver assistance system 200. The advanced driver assistance system 200 is a system that assists a driver based on information acquired by various kinds of sensors.

The Advanced Driver Assistance System (ADAS) may include Autonomous Emergency Braking (AEB), Adaptive Cruise Control (ACC), Cross Traffic Alert (CTA), Lane Change Assistant (LCA), Forward Collision Warning (FCW), Lane Departure Warning (LDW), Lane Keeping Assist (LKA), Speed Assist System (SAS), Traffic Sign Recognition (TSR), High Beam Assist(HBA), Blind Spot Detection (BSD), Autonomous Emergency Steering (AES), Curve Speed Warning System (CSWS), Smart Parking Assist System (SPAS), Traffic Jam Assist (TJA), and Around View Monitor (AVM).

The vehicle 100 includes a lidar apparatus 400.

The lidar apparatus 400 may be classified as a sub-component of the advanced driver assistance system 200. In this case, the advanced driver assistance system 200 may be operated based on information generated by the lidar apparatus 400.

In FIG. 1, the lidar apparatus 400 is disposed at the front of the vehicle. However, aspects of the present invention are not limited thereto. For example, the lidar apparatus 400 may be disposed at the rear, the side, or the roof of the vehicle. In some embodiments, the vehicle 100 may include a plurality of lidar apparatuses 400.

The term "overall length" means the length from the front end to the rear end of the vehicle 100, the term "overall width" means the width of the vehicle 100, and the term "overall height" means the height from the bottom of the wheel to the roof. In the following description, the term "overall length direction L" may mean the reference direction for the measurement of the overall length of the vehicle 100, the term "overall width direction W" may mean the reference direction for the measurement of the overall width of the vehicle 100, and the term "overall height direction H" may mean the reference direction for the measurement of the overall height of the vehicle 100.

FIGS. 1B and 1C are reference views for explanation of a lidar apparatus for vehicles according to an embodiment of the present invention.

The vehicle 100 includes at least one lidar apparatus 400. The lidar apparatus 400 may be mounted to the outside of the vehicle 100, which defines the external appearance of the vehicle 100. For example, the lidar apparatus 400 may be mounted to the front bumper, the radiator grill, the hood, the roof, a door, a side mirror, the tailgate, the trunk lid, or the fender of the vehicle 100.

In some embodiments, the vehicle 100 may include a plurality of lidar apparatuses 400. For example, the lidar apparatuses 400 may include a first lidar apparatus for detecting an object located in front of the vehicle 100 and a second lidar apparatus for detecting an object located at the rear of the vehicle 100. In some embodiments, the lidar apparatuses 400 may further include a third lidar apparatus for detecting an object located at the left side of the vehicle 100 and a fourth lidar apparatus for detecting an object located at the right side of the vehicle 100

The lidar apparatus 400 performs optical beam steering. To this end, the lidar apparatus 400 includes a beam steering unit 530.

The lidar apparatus 400 may adjust an angle of beam steering of transmission light based on information about travel situations. The field of view or the measurement distance of the lidar apparatus 400 may be adjusted by adjusting the angle of beam steering of transmission light.

In the case in which the field of view of the lidar apparatus 400 is increased, the measurement distance of the lidar apparatus 400 is decreased. In the case in which the field of view of the lidar apparatus 400 is decreased, the measurement distance of the lidar apparatus 400 is increased.

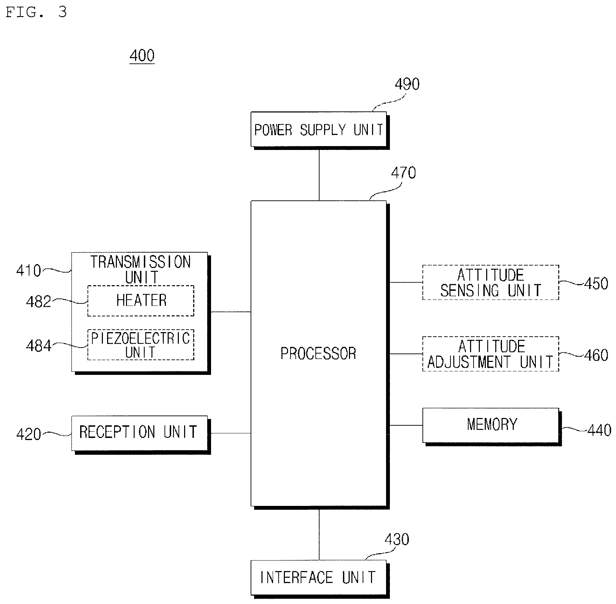

As shown in FIG. 1B, the lidar apparatus 400 may set the detection area of an object by adjusting the angle of beam steering of transmission light under the control of a processor 470 (see FIG. 3). For example, the processor 470 may adjust the side-to-side angle of beam steering of transmission light in the horizontal direction. In another example, the processor 470 may adjust the up-and-down angle of beam steering of transmission light in the vertical direction.

For example, the lidar apparatus 400 may set a first area 11, a second area 12, a third area 13, and a fourth area 14 as the detection area in a first direction under the control of the processor 470. In this case, the first direction may be a horizontal direction.

A first beam steering unit 600 performs beam steering in the first direction. The first beam steering unit 600 may perform beam steering for a corresponding detection area in a first direction under the control of the processor 470. In this case, the first direction may be a horizontal direction.

For example, the lidar apparatus 400 may set a fifth area 21 and a sixth area 21 as the detection area in a second direction. In this case, the second direction may be a vertical direction.

A second beam steering unit 700 performs beam steering in the second direction. The second beam steering unit 700 may perform beam steering for a corresponding detection area in the second direction. In this case, the second direction may be a vertical direction.

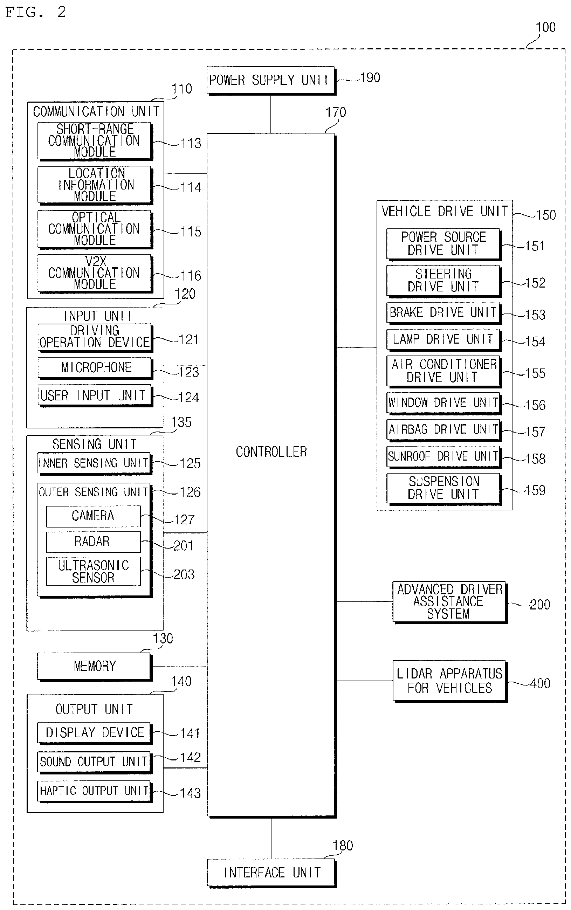

The lidar apparatus 400 may adjust the angle of beam steering based on information about travel situations. The information on travel situations may be detected by the lidar apparatus 400. Alternatively, the information about travel situations may be detected by an inner sensing unit (see FIG. 2) or an outer sensing unit 126 (see FIG. 2).

Meanwhile, the processor 470 of the lidar apparatus 400 may set the number of frames per second (FPS) of the lidar apparatus 400 based on the information about travel situations or the set field of view.

Meanwhile, the processor 470 of the lidar apparatus 400 may set the resolution of the lidar apparatus 400 based on the information about travel situations or the set field of view.

For example, in the case in which the vehicle 100 is in a first travel situation, the field of view of the lidar apparatus 400 may be set to 140 degrees in the horizontal direction. In addition, the field of view of the lidar apparatus 400 may be set to 20 degrees in the vertical direction. In this case, the detection distance may be within a radius between 0 and 30 meter from the center of the lidar apparatus 400. In this case, the number of frames per second (FPS) of the lidar apparatus 400 may be set to 20 Hz. In this case, the range resolution of the lidar apparatus 400 may be set to 5 cm to 10 cm.

For example, in the case in which the vehicle 100 is in a second travel situation, the field of view of the lidar apparatus 400 may be set to 80 degrees in the horizontal direction. In addition, the field of view of the lidar apparatus 400 may be set to 20 degrees in the vertical direction. In this case, the detection distance may be within a radius between 30 and 50 meter from the center of the lidar apparatus 400. In this case, the number of frames per second (FPS) of the lidar apparatus 400 may be set to 20 Hz. In this case, the range resolution of the lidar apparatus 400 may be set to 10 cm.

For example, in the case in which the vehicle 100 is in a third travel situation, the field of view of the lidar apparatus 400 may be set to 60 degrees in the horizontal direction. In addition, the field of view of the lidar apparatus 400 may be set to 10 degrees in the vertical direction. In this case, the detection distance may be within a radius between 50 and 100 meter from the center of the lidar apparatus 400. In this case, the number of frames per second (FPS) of the lidar apparatus 400 may be set to 40 Hz. In this case, the range resolution of the lidar apparatus 400 may be set to 10 cm.

For example, in the case in which the vehicle 100 is in a fourth travel situation, the field of view of the lidar apparatus 400 may be set to 30 degrees in the horizontal direction. In addition, the field of view of the lidar apparatus 400 may be set to 10 degrees in the vertical direction. In this case, the detection distance may be within a radius between 100 and 200 meter from the center of the lidar apparatus 400. In this case, the range resolution of the lidar apparatus 400 may be set to 10 cm to 15 cm.

Meanwhile, the travel situations may be set based on information about the speed of the vehicle. For example, the first travel situation may indicate a case where the speed of the vehicle is less than 30 km/h. The second travel situation may indicate a case where the speed of the vehicle is equal to or greater than 30 km/h and less than 50 km/h. The third travel situation may indicate a case where the speed of the vehicle is equal to or greater than 50 km/h and less than 100 km/h. The fourth travel situation may indicate a case where the speed of the vehicle is equal to or greater than 100 km/h and less than 200 km/h.

Meanwhile, the lidar apparatus 400 may adjust the angle of beam steering based on information about the attitude of the vehicle, information about the direction of the vehicle, information about the location of the vehicle, information about the angle of the vehicle, information about the acceleration of the vehicle, information about the tilt of the vehicle, information about forward/reverse movement of the vehicle, information about the angle of the steering wheel, information about the pressure applied to an accelerator pedal, or information about the pressure applied to a brake pedal, in addition to the information about the speed of the vehicle, described with reference to FIG. 1B.

As shown in FIG. 1C, the lidar apparatus 400 may adjust the angle of beam steering of transmission light based on a distance 31 between the vehicle 100 and an object 30 under the control of the processor 470. The distance 31 between the vehicle 100 and the object 30 may be one example of information about travel situations.

Meanwhile, the processor 470 of the lidar apparatus 400 may set the number of frames per second (FPS) of the lidar apparatus 400 based on the information about travel situations or the set field of view.

Meanwhile, the processor 470 of the lidar apparatus 400 may set the resolution of the lidar apparatus 400 based on the information about travel situations or the set field of view.

For example, in the case in which the distance 31 between the vehicle 100 and the object 30 is within a first range, the field of view of the lidar apparatus 400 may be set to 140 degrees in the horizontal direction. In addition, the field of view of the lidar apparatus 400 may be set to 20 degrees in the vertical direction. In this case, the detection distance may be within a radius between 0 and 30 meter from the center of the lidar apparatus 400. In this case, the number of frames per second (FPS) of the lidar apparatus 400 may be set to 20 Hz. In this case, the range resolution of the lidar apparatus 400 may be set to 5 cm to 10 cm.

For example, in the case in which the distance 31 between the vehicle 100 and the object 30 is within a second range, the field of view of the lidar apparatus 400 may be set to 80 degrees in the horizontal direction. In addition, the field of view of the lidar apparatus 400 may be set to 20 degrees in the vertical direction. In this case, the detection distance may be within a radius between 30 and 50 meter from the center of the lidar apparatus 400. In this case, the number of frames per second (FPS) of the lidar apparatus 400 may be set to 20 Hz. In this case, the range resolution of the lidar apparatus 400 may be set to 10 cm.

For example, in the case in which the distance 31 between the vehicle 100 and the object 30 is within a third range, the field of view of the lidar apparatus 400 may be set to 60 degrees in the horizontal direction. In addition, the field of view of the lidar apparatus 400 may be set to 10 degrees in the vertical direction. In this case, the detection distance may be within a radius between 50 and 100 meter from the center of the lidar apparatus 400. In this case, the number of frames per second (FPS) of the lidar apparatus 400 may be set to 40 Hz. In this case, the range resolution of the lidar apparatus 400 may be set to 10 cm.

For example, in the case in which the distance 31 between the vehicle 100 and the object 30 is within a fourth range, the field of view of the lidar apparatus 400 may be set to 30 degrees in the horizontal direction. In addition, the field of view of the lidar apparatus 400 may be set to 10 degrees in the vertical direction. In this case, the detection distance may be within a radius between 100 and 200 meter from the center of the lidar apparatus 400. In this case, the range resolution of the lidar apparatus 400 may be set to 10 cm to 15 cm.

Meanwhile, the lidar apparatus 400 may adjust the angle of beam steering based on the speed of the vehicle 100 relative to the object 30 or the location of the object 30, in addition to the distance 31 between the vehicle 100 and the object 30, described with reference to FIG. 1C.

Meanwhile, the object may include at least one selected from among a lane, a nearby vehicle, a pedestrian, a light, a traffic signal, a road, a structure, a bump, a geographical feature, and an animal.

FIG. 2 is a reference block diagram for explanation of the vehicle according to the embodiment of the present invention.

Referring to FIG. 2, the vehicle 100 may include a communication unit 110, an input unit 120, a sensing unit 125, a memory 130, an output unit 140, a vehicle drive unit 150, a controller 170, an interface unit 180, a power supply unit 190, an advanced driver assistance system 200, and includes a lidar apparatus 400.

The communication unit 110 may include a short-range communication module 113, a location information module 114, an optical communication module 115, and a V2X communication module 116.

The communication unit 110 may include one or more Radio Frequency (RF) circuits or elements in order to perform communication with other devices.

The short-range communication module 113 may support short-range communication using at least one selected from among BluetoothTM, Radio Frequency IDdentification (RFID), Infrared Data Association (IrDA), Ultra-WideBand (UWB), ZigBee, Near Field Communication (NFC), Wireless-Fidelity (Wi-Fi), Wi-Fi Direct, and Wireless USB (Wireless Universal Serial Bus).

The short-range communication module 113 may form wireless area networks to perform short-range communication between the vehicle 100 and at least one external device. For example, the short-range communication module 113 may exchange data with a mobile terminal of a passenger in a wireless manner. The short-range communication module 113 may receive weather information and road traffic state information (e.g. Transport Protocol Expert Group (TPEG) information) from the mobile terminal. When a user gets into the vehicle 100, a mobile terminal of the user and the vehicle 100 may pair with each other automatically or upon execution of a pairing application by the user.

The location information module 114 is a module for acquiring the location of the vehicle 100. A typical example of the location information module 114 is a Global Positioning System (GPS) module. For example, when the vehicle 100 utilizes the GPS module, the location of the vehicle 100 may be acquired using signals transmitted from GPS satellites.

Meanwhile, in some embodiments, the location information module 114 may be a component included in the sensing unit 125, rather than a component included in the communication unit 110.

The optical communication module 115 may include a light emitting unit and a light receiving unit.

The light receiving unit may convert light into electrical signals so as to receive information. The light receiving unit may include Photodiodes (PDs) for receiving light. The photo diodes may convert light into electrical signals. For example, the light receiving unit may receive information regarding a preceding vehicle from light emitted from a light source included in the preceding vehicle.

The light emitting unit may include at least one light emitting element for converting electrical signals into light. Here, the light emitting element may be a Light Emitting Diode (LED) or a Laser Diode (LD). The light emitting unit converts electrical signals into light to thereby emit the light. For example, the light emitting unit may externally emit light by flashing the light emitting element at a predetermined frequency. In some embodiments, the light emitting unit may include an array of light emitting elements. In some embodiments, the light emitting unit may be integrated with a lamp provided in the vehicle 100. For example, the light emitting unit may be at least one selected from among a headlight, a taillight, a brake light, a turn signal light, and a sidelight. For example, the optical communication module 115 may exchange data with another vehicle through optical communication.

The V2X communication module 116 is a module for performing wireless communication with a server or another vehicle. The V2X communication module 116 includes a module capable of supporting a protocol for communication between vehicles (V2V) or communication between a vehicle and some infrastructure (V2I). The vehicle 100 may perform wireless communication with an external server or another vehicle via the V2X communication module 116.

The input unit 120 may include a driving operation device 121, a microphone 123, and a user input unit 124.

The driving operation device 121 receives a user input for driving of the vehicle 100. The driving operation device 121 may include a steering input device, a shift input device, an acceleration input device, and a brake input device.

The steering input device receives a user input with regard to the direction of travel of the vehicle 100. The steering input device may take the form of a wheel to enable a steering input through the rotation thereof. In some embodiments, the steering input device may be configured as a touchscreen, a touch pad, or a button.

The shift input device receives an input for selecting one of Park (P), Drive (D), Neutral (N), and Reverse (R) gears of the vehicle 100 from the user. The shift input device may take the form of a lever. In some embodiments, the shift input device may be configured as a touchscreen, a touch pad, or a button.

The acceleration input device receives a user input for acceleration of the vehicle 100. The brake input device receives a user input for deceleration of the vehicle 100. Each of the acceleration input device and the brake input device may take the form of a pedal. In some embodiments, the acceleration input device or the brake input device may be configured as a touchscreen, a touch pad, or a button.

The microphone 123 may process external sound signals into electrical data. The processed data may be utilized in various ways in accordance with a function that the vehicle 100 is performing. The microphone 123 may convert a user voice command into electrical data. The converted electrical data may be transmitted to the controller 170.

Meanwhile, in some embodiments, the microphone 123 may be a component included in the sensing unit 125, rather than a component included in the input unit 120.

The user input unit 124 is configured to receive information from a user. When information is input through the user input unit 124, the controller 170 may control the operation of the vehicle 100 according to the input information. The user input unit 124 may include a touch input unit or a mechanical input unit. In some embodiments, the user input unit 124 may be located in one region of the steering wheel. In this case, the driver may operate the user input unit 124 with the fingers while gripping the steering wheel.

The sensing unit 135 may sense the state of the vehicle 100 or the situation outside the vehicle 100. The sensing unit 135 may include an inner sensing unit 125 and an outer sensing unit 126.

The inner sensing unit 125 senses the state of the vehicle 100. The inner sensing unit 125 may include an attitude sensor (for example, a yaw sensor, a roll sensor, or a pitch sensor), a collision sensor, a wheel sensor, a speed sensor, a gradient sensor, a weight sensor, a heading sensor, a yaw sensor, a gyro sensor, a position module, a vehicle forward/reverse movement sensor, a battery sensor, a fuel sensor, a tire sensor, a steering sensor based on the rotation of the steering wheel, an in-vehicle temperature sensor, an in-vehicle humidity sensor, an ultrasonic sensor, an illumination sensor, an accelerator pedal position sensor, and a brake pedal position sensor.

The inner sensing unit 125 may acquire sensing signals with regard to, for example, vehicle attitude information, vehicle collision information, vehicle driving direction information, vehicle location information (GPS information), vehicle angle information, vehicle speed information, vehicle acceleration information, vehicle tilt information, vehicle forward/reverse movement information, battery information, fuel information, tire information, vehicle lamp information, in-vehicle temperature information, in-vehicle humidity information, steering-wheel rotation angle information, out-of-vehicle illumination information, information about the pressure applied to an accelerator pedal, and information about the pressure applied to a brake pedal.

The inner sensing unit 125 may further include, for example, an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, and a Crank Angle Sensor (CAS).

The outer sensing unit 126 may sense the situation outside the vehicle 100. The outer sensing unit 126 may sense an object located outside the vehicle 100. Here, the object may include a lane, a nearby vehicle, a pedestrian, a light, a traffic signal, a road, a structure, a bump, a geographical feature, and an animal.

The lane may be the lane in which the vehicle 100 is traveling or the lane next to the lane in which the vehicle 100 is traveling. The lane may include left and right lines that define the lane.

The nearby vehicle may be a vehicle that is traveling in the vicinity of the vehicle 100. The nearby vehicle may be a vehicle spaced apart from the vehicle 100 by a predetermined distance or less. The nearby vehicle may be a preceding vehicle or a following vehicle. The nearby vehicle may be a vehicle that is traveling in a lane next to the lane in which the vehicle 100 is traveling. The nearby vehicle may be a vehicle that is traveling in a direction intersecting the direction in which the vehicle 100 is traveling at an intersection.

The pedestrian may be a person on a sidewalk or on the roadway.

The light may be light generated by a lamp provided in the nearby vehicle. The light may be light generated by a streetlight. The light may be solar light.

The traffic signal may include a traffic signal lamp, a traffic sign, and a pattern or text painted on a road surface.

The road may include a road surface, a curve, and slopes, such as an upward slope and a downward slope.

The structure may be a body located around the road in the state of being fixed to the ground. For example, the structure may include a streetlight, a roadside tree, a building, and a signal lamp.

The geographical feature may include a mountain and a hill.

Meanwhile, the object may be classified as a movable object and a stationary object. For example, the movable object may include a nearby vehicle and a pedestrian. For example, the stationary object may include a traffic signal, a road, and a structure.

The outer sensing unit 126 may include a camera 127, a radar 201, a lidar 202, and an ultrasonic sensor 203.

The camera 127 may be a camera device for vehicles. The camera 127 may include a mono camera and a stereo camera.

The camera 127 may be located at an appropriate position outside a vehicle in order to acquire images of the outside of the vehicle.

For example, the camera 127 may be disposed near a front windshield 10 in the vehicle in order to acquire images of the front of the vehicle. Alternatively, the camera 127 may be disposed around a front bumper or a radiator grill.

For example, the camera 127 may be disposed near a rear glass in the vehicle in order to acquire images of the rear of the vehicle. Alternatively, the camera 127 may be disposed around a rear bumper, a trunk, or a tailgate.

For example, the camera 127 may be disposed near at least one of the side windows in the vehicle in order to acquire images of the side of the vehicle. Alternatively, the camera 127 may be disposed around a side mirror, a fender, or a door.

The radar 201 may include an electromagnetic wave transmission unit, an electromagnetic wave reception unit, and a processor. The radar 201 may be realized as a pulse radar or a continuous wave radar depending on the principle of emission of an electric wave. In addition, the continuous wave radar may be realized as a Frequency Modulated Continuous Wave (FMCW) type radar or a Frequency Shift Keying (FSK) type radar depending on the waveform of a signal.

The radar 201 may detect an object based on a transmitted electromagnetic wave, and may detect the distance to the detected object and the speed relative to the detected object.

The radar 201 may provide the acquired information about the object to the controller 170, the advanced driver assistance system 400, or an illumination device for vehicles. Here, the information about the object may include information about the distance to the object.

The radar 201 may be located at an appropriate position outside the vehicle in order to sense an object located in front of the vehicle, an object located to the rear of the vehicle, or an object located to the side of the vehicle.

The ultrasonic sensor 203 may include an ultrasonic wave transmission unit, an ultrasonic wave reception unit, and a processor. The ultrasonic sensor 203 may detect an object based on a transmitted ultrasonic wave, and may detect the distance to the detected object and the speed relative to the detected object.

The ultrasonic sensor 203 may provide the acquired information about the object to the controller 170, the advanced driver assistance system 400, or the illumination device. Here, the information about the object may include information about the distance to the object.

The ultrasonic sensor 203 may be located at an appropriate position outside the vehicle in order to sense an object located in front of the vehicle, an object located to the rear of the vehicle, or an object located to the side of the vehicle.

Meanwhile, in some embodiments, the lidar apparatus 400 may be classified as a sub-component of the outer sensing unit 126.

The memory 130 is electrically connected to the controller 170. The memory 130 may store basic data for each unit, control data for the operational control of each unit, and input/output data. The memory 130 may be any of various hardware storage devices, such as a ROM, a RAM, an EPROM, a flash drive, and a hard drive. The memory 130 may store various data for the overall operation of the vehicle 100, such as programs for the processing or control of the controller 170.

The output unit 140 is configured to output information processed in the controller 170. The output unit 140 may include a display device 141, a sound output unit 142, and a haptic output unit 143.

The display device 141 may display various graphic objects. For example, the display device 141 may display vehicle-associated information. Here, the vehicle-associated information may include vehicle control information for the direct control of the vehicle or driver assistance information to guide the driver in driving the vehicle. In addition, the vehicle-associated information may include vehicle state information indicating the current state of the vehicle or vehicle traveling information regarding the traveling of the vehicle.

The display device 141 may include at least one selected from among a Liquid Crystal Display (LCD), a Thin Film Transistor LCD (TFT LCD), an Organic Light Emitting Diode (OLED), a flexible display, a three-dimensional display (3D display), and an e-ink display.

The display device 141 may form an inter-layer structure together with a touch sensor, or may be integrally formed with the touch sensor to implement a touchscreen. The touchscreen may function as the user input unit 124, which provides an input interface between the vehicle 100 and the user, and may also function to provide an output interface between the vehicle 100 and the user. In this case, the display device 141 may include a touch sensor for sensing a touch on the display device 141 so as to receive a control command in a touch manner. When a touch is input to the display device 141 as described above, the touch sensor may sense the touch, and the controller 170 may generate a control command corresponding to the touch. The content input in a touch manner may be characters or numbers, or may be, for example, instructions in various modes or menu items that may be designated.

Meanwhile, the display device 141 may include a cluster for allowing a driver to check vehicle state information or vehicle traveling information while driving the vehicle. The cluster may be located on a dashboard. In this case, the driver may check information displayed on the cluster while looking forward.

Meanwhile, in some embodiments, the display device 141 may be implemented as a Head Up display (HUD). When the display device 141 is implemented as a HUD, information may be output through a transparent display provided on the front windshield 10. Alternatively, the display device 141 may include a projector module in order to output information through an image projected on the front windshield 10.

Meanwhile, in some embodiments, the display device 141 may include a transparent display. In this case, the transparent display may be attached to the front windshield 10.

The transparent display may display a predetermined screen with a predetermined transparency. In order to achieve the transparency, the transparent display may include at least one selected from among a transparent Thin Film Electroluminescent (TFEL) display, an Organic Light Emitting Diode (OLED) display, a transparent Liquid Crystal Display (LCD), a transmissive transparent display, and a transparent LED display. The transparency of the transparent display may be adjustable.

In some embodiments, the display device 141 may function as a navigation device.

The sound output unit 142 converts electrical signals from the controller 170 into audio signals and outputs the audio signals. To this end, the sound output unit 142 may include, for example, a speaker. The sound output unit 142 may output sound corresponding to the operation of the user input unit 124.

The haptic output unit 143 generates a tactile output. For example, the haptic output unit 143 may vibrate a steering wheel, a safety belt, or a seat so as to allow the user to recognize the output thereof.

The vehicle drive unit 150 may control the operation of various devices of the vehicle. The vehicle drive unit 150 may include a power source drive unit 151, a steering drive unit 152, a brake drive unit 153, a lamp drive unit 154, an air conditioner drive unit 155, a window drive unit 156, an airbag drive unit 157, a sunroof drive unit 158, and a suspension drive unit 159.

The power source drive unit 151 may perform electronic control of a power source inside the vehicle 100.

For example, in the case in which a fossil fuel-based engine (not shown) is the power source, the power source drive unit 151 may perform electronic control of the engine. As such, the power source drive unit 151 may control, for example, the output torque of the engine. In the case in which the power source drive unit 151 is such an engine, the power source drive unit 151 may limit the speed of the vehicle by controlling the output torque of the engine under the control of the controller 170.

In another example, when an electric motor (not shown) is the power source, the power source drive unit 151 may perform control of the motor. As such, the power source drive unit 151 may control, for example, the RPM and torque of the motor.

The steering drive unit 152 may perform electronic control of a steering apparatus inside the vehicle 100. As such, the steering drive unit 152 may change the direction of travel of the vehicle 100.

The brake drive unit 153 may perform electronic control for a brake apparatus (not shown) inside the vehicle 100. For example, the brake drive unit 153 may reduce the speed of the vehicle 100 by controlling the operation of brakes located at wheels. In another example, the brake drive unit 153 may adjust the direction of travel of the vehicle 100 leftward or rightward by differently operating respective brakes located at left and right wheels.

The lamp drive unit 154 may turn on and off at least one lamp arranged inside or outside the vehicle. In addition, the lamp drive unit 154 may control, for example, the intensity and radiation direction of the light from the lamp. For example, the lamp drive unit 154 may control a turn-signal lamp or a brake lamp.

The air conditioner drive unit 155 may perform electronic control of an air conditioner (not shown) inside the vehicle 100. For example, when the interior temperature of the vehicle is high, the air conditioner drive unit 155 may operate the air conditioner so as to supply cool air to the interior of the vehicle.

The window drive unit 156 may perform electronic control of a window apparatus inside the vehicle 100. For example, the window drive unit 156 may control opening or closing of left and right windows of the vehicle.

The airbag drive unit 157 may perform electronic control of an airbag apparatus inside the vehicle 100. For example, the airbag drive unit 157 may control an airbag to be deployed in a dangerous situation.

The sunroof drive unit 158 may perform electronic control of a sunroof apparatus (not shown) inside the vehicle 100. For example, the sunroof drive unit 158 may control opening or closing of a sunroof.

The suspension drive unit 159 may perform electronic control of a suspension apparatus (not shown) inside the vehicle 100. For example, when the road surface is uneven, the suspension drive unit 159 may control the suspension apparatus in order to reduce vibration of the vehicle 100.

Meanwhile, in some embodiments, the vehicle drive unit 150 may include a chassis drive unit. Here, the chassis drive unit may include the steering drive unit 152, the brake drive unit 153, and the suspension drive unit 159.

The controller 170 may control the overall operation of each unit inside the vehicle 100. The controller 170 may be referred to as an Electronic Control Unit (ECU).

The controller 170 may be implemented in a hardware manner using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

The interface unit 180 may serve as a passage for various kinds of external devices that are connected to the vehicle 100. For example, the interface unit 180 may have a port that is connectable to a mobile terminal and may be connected to the mobile terminal via the port. In this case, the interface unit 180 may exchange data with the mobile terminal.

Meanwhile, the interface unit 180 may serve as a passage for the supply of electrical energy to a mobile terminal connected thereto. When the mobile terminal is electrically connected to the interface unit 180, the interface unit 180 may provide electrical energy, supplied from the power supply unit 190, to the mobile terminal under the control of the controller 170.

The power supply unit 190 may supply power required to operate the respective components under the control of the controller 170. In particular, the power supply unit 190 may receive power from, for example, a battery (not shown) inside the vehicle 100.

The advanced driver assistance system 200 may assist a driver in driving the vehicle. The advanced driver assistance system 200 may include the lidar apparatus 400.

The lidar apparatus 400 may detect an object located outside the vehicle 100.

The lidar apparatus 400 may detect an object based on the time of flight (TOF) or the phase difference between a transmission signal and a reception signal through the medium of light.

The lidar apparatus 400 may detect the distance to the object, the speed relative to the object, and the location of the object.

FIG. 3 is a reference block diagram for explanation of the lidar apparatus for vehicles according to the embodiment of the present invention.

Referring to FIG. 3, the lidar apparatus 400 includes a transmission unit 410, a reception unit 420, a memory 440, an interface unit 430, a processor 470, and a power supply unit 490. In some embodiment, at least one of the above-mentioned components of the lidar apparatus 400 may be omitted, or the lidar apparatus 400 may further include at least one additional component.

The transmission unit 410 may generate and output a transmission signal. The transmission unit 410 may be controlled by the processor 470.

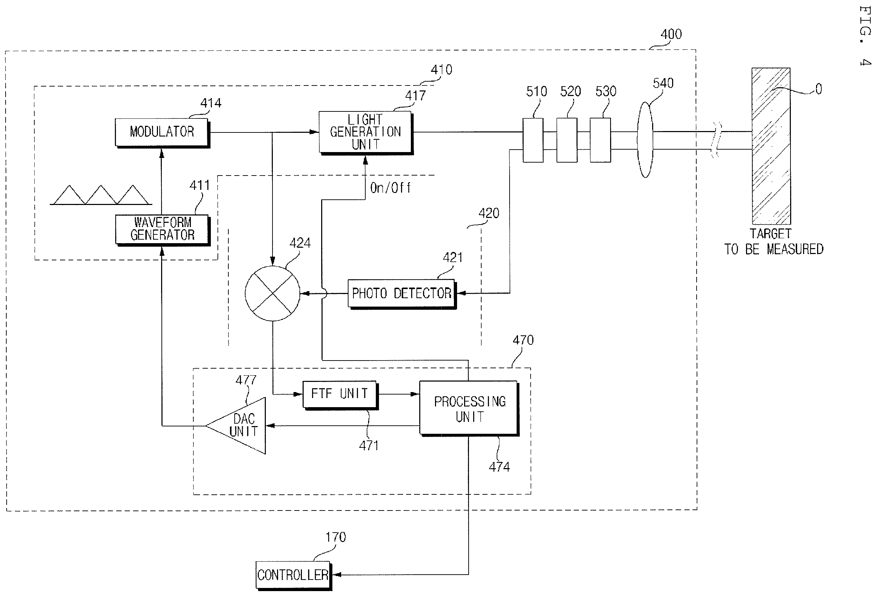

The transmission unit 410 may output a beam. For example, the transmission unit 410 may output a transmission signal in the form of light. The transmission unit 410 includes a light generation unit 417 (see FIG. 4). The light generation unit 417 may convert an electrical signal into light. For example, the light generation unit 417 may include a laser generation unit. In this case, a transmission signal is realized as an optical signal.

For example, the transmission unit 410 may output a transmission signal in the form of a Frequency Modulated Continuous Wave (FMCW). That is, the transmission signal may be realized in the form of an FMCW.

The transmission unit 410 may perform beam steering of the light generated by the light generation unit 417.

The transmission unit 410 may perform scanning using the steered light.

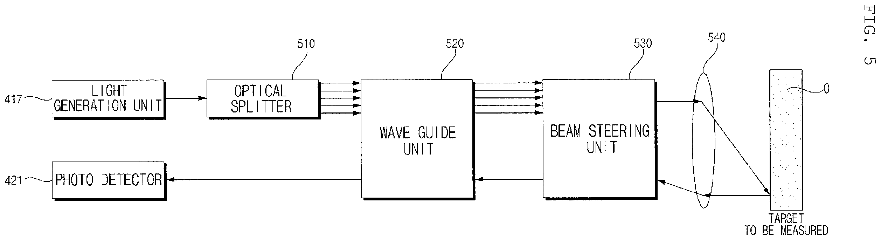

The transmission unit 410 includes a light generation unit 417 (see FIG. 5), an optical splitter 510 (see FIG. 5), a wave guide unit 520 (see FIG. 5), and a beam steering unit 530 (see FIG. 5).

In embodiments, the optical splitter 510 and the wave guide unit 520 are configured as sub-components of the beam steering unit 530. The optical splitter 510 and the wave guide unit 520 are configured as sub-components of the first beam steering unit 600.

The light generation unit 417 may generate light corresponding to a transmission signal, and may output the optical signal. The light generation unit 417 may generate transmission light, and may output the generated transmission light.

The light generation unit 417 may generate transmission light consisting of beams, and output the generated transmission light.

The light generated by the light generation unit 417 may be laser.

The optical splitter 510 may split the transmission light generated by the light generation unit 417.

The wave guide unit 520 may guide light introduced thereinto. The wave guide unit 520 may guide the light split by the optical splitter 510 to the beam steering unit 530. For example, the wave guide unit 520 may guide the light split by the optical splitter 510 to the first beam steering unit 600.

The beam steering unit 530 may perform beam steering on the light generated by the light generation unit 417. The beam steering unit 530 may continuously change the path of light introduced thereinto. The beam steering unit 530 may perform scanning through the steered light.

The beam steering unit 530 includes the first steering unit 600 and the second beam steering unit 700.

The first beam steering unit 600 may steer a beam in a first direction. The first beam steering unit 600 includes an Arrayed Waveguide Grating (AWG).

The second steering unit 700 may steer a beam in a second direction. The second beam steering unit 700 includes a grating coupler. The second beam steering unit 700 may include an AWG.

The first beam steering unit 600 includes the AWG, the second steering unit 700 includes a plurality of grating couplers which are arranged to respectively correspond to a plurality of output optical paths of the AWG.

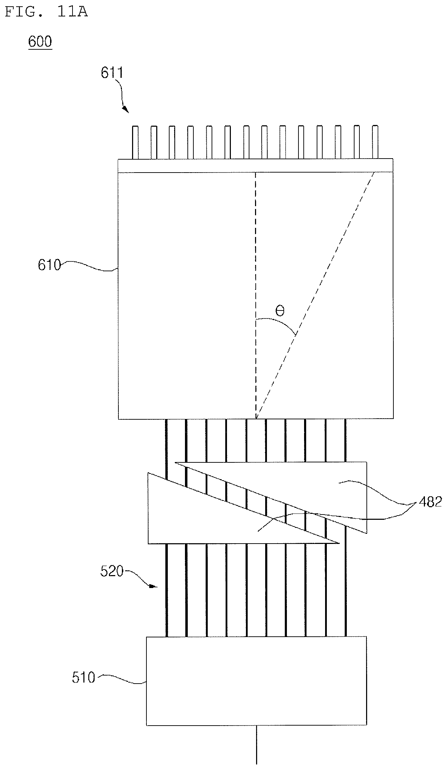

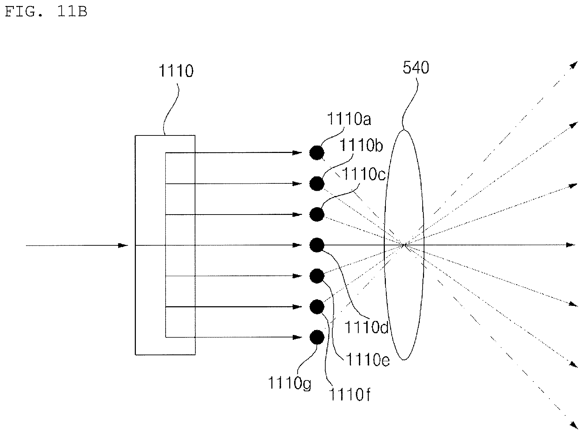

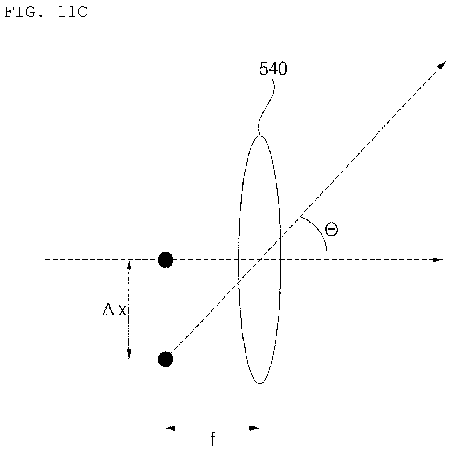

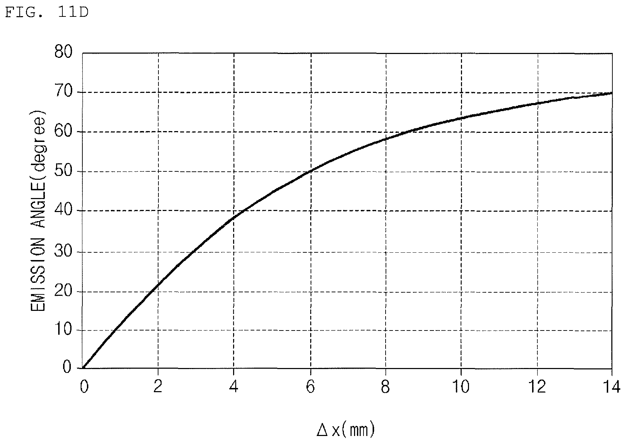

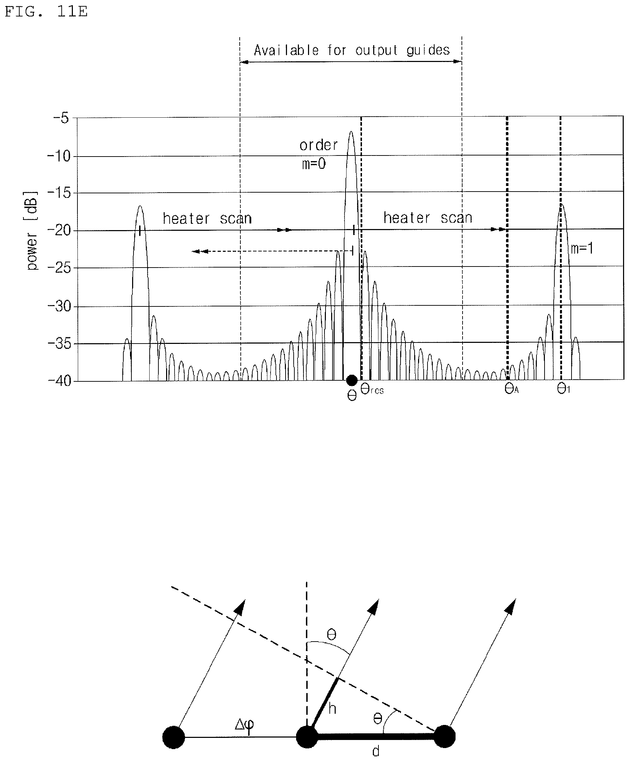

The first beam steering unit 600 and the second beam steering unit 700 are described in more detail with reference to FIGS. 11 to 14.

Meanwhile, in some embodiments, not being within the claimed subject-matter, the transmission unit 410 may include an optical coupler (not shown) in place of the optical splitter 510 (see FIG. 5). The optical coupler may perform light division and light combination. Here, the optical coupler may be, for example, a star coupler.

In embodiments, the transmission unit 410 further includes one or both of a heater 482 and a piezoelectric unit 484.

The heater 482 may provide heat to the wave guide unit 520 (see FIGS. 4 and 5). For example, the heater 482 may provide heat to the wave guide unit 520 based on a received electrical signal in order to change individual phases of beams of split light.

The heater 482 may include an element for converting electrical energy into thermal energy. For example, the heater 482 may provide heat to the wave guide unit 520 by converting electrical energy into thermal energy using the Peltier effect.

When the heater 482 provides heat to the wave guide unit 520, the refractive index of a core 521 included in the wave guide unit 520 may be changed. In this case, the phase of light guided by the wave guide unit 520 may be changed. The lidar apparatus 400 may perform beam steering using such phase-changed light.

The heater 482 may be operated under the control of the processor 470.

The piezoelectric unit 484 may apply pressure to the wave guide unit 520 (see FIGS. 4 and 5). For example, the piezoelectric unit 484 may apply pressure to the wave guide unit 520 based on an electrical signal in order to change individual phases of beams of split light.

The piezoelectric unit 484 may include a piezoelectric element. For example, the piezoelectric unit 484 may apply pressure to the wave guide unit 520 using the piezoelectric effect.

When the piezoelectric unit 484 provides pressure to the wave guide unit 520, the refractive index of the core 521 included in the wave guide unit 520 may be changed. In this case, the phase of light guided by the wave guide unit 520 may be changed. The lidar apparatus 400 may perform beam steering using such phase-changed of light.

The piezoelectric unit 484 may be operated under the control of the processor 470.

The reception unit 420 may acquire a reception signal. Here, the reception signal is a signal formed as a result of the transmission signal being reflected by an object. The reception unit 420 may be controlled by the processor 470.

The reception unit 420 may acquire reflection light which is formed as a result of a beam being reflected by the object.

In the case in which a transmission in the form of an FMCW is output, the reception unit 420 may acquire a reception signal in the form of an FMCW.

In the case in which an object is detected through the medium of an optical signal, the reception unit 420 may include a photo detector 421 (see FIG. 4). The photo detector 421 may convert light into electricity. For example, the photo detector 421 may include a photo diode (PD).

The reception unit 420 may include a photo diode (PD) array. In this case, one photo diode may form one pixel. The processor 470 may generate an image based on information sensed by each photo diode of the photo diode array.

The reception unit 420 may receive light reflected from respective points of transmission light that is scanned.

For example, when transmission light is output toward a first point, the reception unit 420 may receive light reflected from the first point. In addition, when transmission light is output toward a second point, the reception unit 420 may receive light reflected from the second point. In this way, the reception unit 420 may continuously receive light reflected from a plurality of points in order to sense the reflection light from each point. Each point may be defined as one pixel. The processor 470 may generate an image based on the information sensed at each point.

The memory 440 may store various kinds of data required for the overall operation of the lidar apparatus 400, such as programs for processing or controlling the processor 470. The memory 440 may be any one of various hardware storage devices, such as a ROM, a RAM, an EPROM, a flash drive, and a hard drive.

The interface unit 430 may function as a path for allowing the lidar apparatus 400 to exchange data with a device connected to the lidar apparatus 400 therethrough. The interface unit 430 may receive data from a unit that is electrically connected to the lidar apparatus 400, and may transmit a signal processed or generated by the processor 470 to the unit that is electrically connected to the lidar apparatus 400. The interface unit 430 may function as a path for allowing the lidar apparatus 400 to exchange data with a controller 270 of the advanced driver assistance system 200 or with the ECU 770 of the vehicle 700 therethrough.

The interface unit 430 may receive information or data from the controller 270 of the advanced driver assistance system 200. For example, the interface unit 430 may receive information about an expected collision time from the controller 270 of the advanced driver assistance system 200. For example, the interface unit 430 may receive information about the distance to an object from the controller 270 of the advanced driver assistance system 200.

The interface unit 430 may transmit signals, data, or information to the other devices in the vehicle 100.

For example, the interface unit 430 may provide signals, data, or information generated by the processor 470 to another object sensing device in the vehicle 100.

The interface unit 430 may receive information about travel situations from the inner sensing unit 125 (see FIG. 2) or the outer sensing unit 126 (see FIG. 2) of the vehicle 100.

The information about travel situations may include at least one selected from between information sensed in the vehicle and information sensed outside the vehicle. The information sensed in the vehicle may be information sensed and generated by the inner sensing unit 125. The information sensed outside the vehicle may be information sensed and generated by the outer sensing unit 126.

The processor 470 may be electrically connected to the respective units in the lidar apparatus 400 so as to control the overall operation of the respective units.

The processor 470 may compare a reflection signal with a transmission signal to acquire information about an object. For example, the processor 470 may compare reflection light with transmission light to acquire information about an object.

Specifically, the processor 470 may calculate the time of flight (TOF) or the phase shift between the transmission light and the reflection light in order to acquire information about an object.

Information about an object may include information about whether an object is present or not, information about the distance to an object, information about the speed relative to an object, and information about the location of an object.

The processor 470 may generate an image of the object based on the transmission light and the reception light. Specifically, the processor 470 may compare transmission light with reception light corresponding thereto at each pixel to generate an image of the object. For example, the processor 470 may compare transmission light with reception light corresponding thereto at each pixel to calculate the TOF or the phase shift for each pixel, thereby generating an image of the object.

The processor 470 may receive information about travel situations from the inner sensing unit 125 or the outer sensing unit 126 through the interface unit 430. The processor 470 may control the transmission unit 410, based on information about travel situations. For example, the processor 470 may steer a beam in the first direction or in the second direction based on information on travel situations.

The information about travel situations may include at least one selected from between information sensed in the vehicle and information sensed outside the vehicle.

The information sensed in the vehicle may be information sensed and generated by the inner sensing unit 125. For example, the information sensed in the vehicle may include at least one selected from among vehicle attitude information, vehicle driving direction information, vehicle location information, vehicle angle information, vehicle speed information, vehicle acceleration information, vehicle tilt information, vehicle forward/reverse movement information, steering-wheel rotation angle information, information about the pressure applied to an accelerator pedal, and information about the pressure applied to a brake pedal.

The information sensed outside the vehicle may be information sensed and generated by the outer sensing unit 126. For example, the information sensed outside the vehicle may include information about an object located outside the vehicle. Such information about an object may include information about whether an object is present or not, information about the distance to an object, information about the speed relative to an object, and information about the location of an object.

Meanwhile, the object may include at least one selected from among a lane, a nearby vehicle, a pedestrian, a light, a traffic signal, a road, a structure, a bump, a geographical feature, and an animal.

Information about travel situations may be information about an object located in the vicinity of the vehicle. Here, the information about the object may be information generated by the processor 470 based on reflection light.

The processor 470 may generate the information about the object based on the reflection light, and may adjust an angle of beam steering of the transmission light based on the generated information about the object.

The processor 470 may adjust the angle of beam steering of the transmission light based on the information about travel situations.

The processor 470 may adjust the field of view (FOV) of the transmission light by adjusting the angle of beam steering of the transmission light.

The processor 470 may set the detection area of the object by adjusting the angle of beam steering of the transmission light.

Specifically, the processor 470 may adjust the side-to-side angle of beam steering of the transmission light in the horizontal direction. The processor 470 may adjust the up-and-down angle of beam steering of the transmission light in the vertical direction.

The processor 470 may control a heater 482 so as to change the individual phases of beams of light split by the optical splitter 510.

The processor 470 may control a piezoelectric unit 484 so as to change the individual phases of beams of light split by the optical splitter 510.

The processor 470 may generate a depth map based on the transmission light and the reflection light. Specifically, the processor 470 may compare transmission light with reflection light corresponding thereto at each pixel to calculate the TOF or the phase shift for each pixel, thereby generating a depth map.

The processor 470 may determine whether a disturbance has occurred based on the depth value of a predetermined region of interest (ROI) on the depth map. Specifically, the processor 470 may accumulate the depth value of the region of interest, and may store the accumulated depth values in the memory 440. The processor 470 may determine whether a disturbance has occurred based on the difference between the average value of the accumulatively stored depth values and a newly acquired depth value of the region of interest.

The processor 470 may be implemented using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

Meanwhile, in some embodiments, the lidar apparatus 400 may further include an attitude sensing unit 450 and an attitude adjustment unit 460.

The attitude sensing unit 450 may sense the attitude of the lidar apparatus 400. In order to transmit a transmission signal toward an object located in front of the vehicle, an object located at the rear of the vehicle, or an object located at the side of the vehicle, and to acquire a reception signal reflected by the object, the lidar apparatus 400 must take an appropriate attitude. In the case in which the attitude of the lidar apparatus 400 is changed due to the application of external impact to the vehicle, the attitude sensing unit 450 may sense the change in attitude of the lidar apparatus 400.

In order to sense the attitude of the lidar apparatus 400, the attitude sensing unit 450 may include at least one selected from among an infrared sensor, a bolt fastening sensor (for example, a bolt magnet sensor), and a gyro sensor.

The attitude adjustment unit 460 may adjust the attitude of the lidar apparatus 400 based on the results of sensing by the attitude sensing unit 450. The attitude adjustment unit 460 may include a driving means, such as a motor. The attitude adjustment unit 460 may adjust the attitude of the lidar apparatus 400 under the control of the processor 470 such that the lidar apparatus 400 can appropriately transmit a transmission signal and appropriately acquire a reception signal.

The processor 470 may receive information about the attitude of the lidar apparatus 400 sensed by the attitude sensing unit 450. The processor 470 may control the attitude adjustment unit 460 based on the received information about the attitude of the lidar apparatus 400.

In some embodiments, the processor 470 may control the direction and magnitude of a beam in a transmission signal in the state in which the attitude of the lidar apparatus 400 is maintained.

Meanwhile, in the case in which the attitude of the lidar apparatus 400, sensed by the attitude sensing unit 450, is changed, the processor 470 may provide relevant information to the controller 170 through the interface unit 430. In this case, the controller 170 may output information about the change in attitude of the lidar apparatus 400 through the output unit 140 such that a user can notice the change in attitude of the lidar apparatus 400.

FIG. 4 is a detailed reference block diagram for explanation of the lidar apparatus for vehicles according to the embodiment of the present invention.

Referring to FIG. 4, the transmission unit 410 may include a waveform generator 411, a modulator 414, and a light generation unit 417.

The waveform generator 411 may generate a transmission signal. To this end, the waveform generator 411 may include an oscillating element, such as a Voltage Control Oscillator (VCO). Alternatively, in some embodiments, the waveform generator 411 may include a plurality of oscillators.

For example, the waveform generator 411 may generate an FMCW signal.

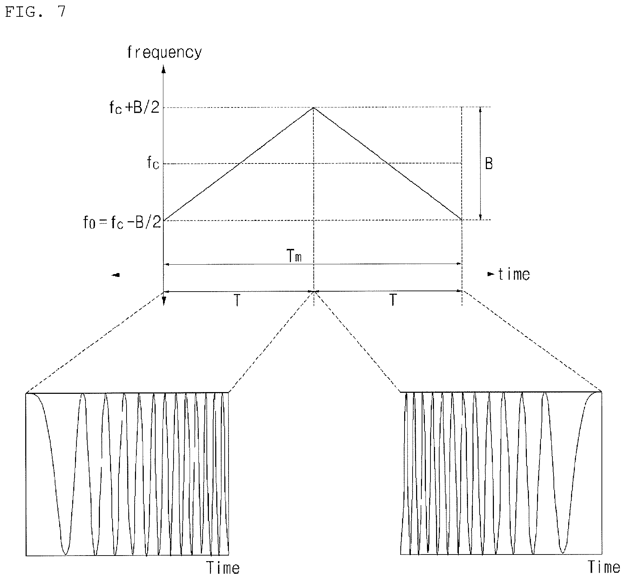

The FMCW signal will be described with reference to FIG. 7.

FIG. 7 is a reference view for explanation of an example of an FMCW signal according to an embodiment of the present invention.

Referring to FIG. 7, the waveform generator 411 may generate a triangle wave-shaped frequency modulated continuous wave. The transmission unit 410 may output a transmission signal corresponding to the FMCW signal.

The lidar apparatus 400 may analyze the spectrum of the frequency of a beat signal (hereinafter, referred to as a beat frequency) that is acquired from a reception signal and a transmission signal (for example, a time domain signal indicating the difference in frequency between a reception signal and a transmission signal) in order to acquire information about the distance to an object and information about the speed of the object. In FIG. 7, fc indicates a center frequency, f0 indicates a start frequency, B indicates a modulation bandwidth, and Tm indicates a modulation period.

An FMCW signal may be classified as an up-chirp signal or a down-chirp signal.

Referring back to FIG. 4, the modulator 414 carries a transmission signal generated by the waveform generator 411 in light generated by the light generation unit 417. For example, the modulator 414 carries an FMCW signal in light.

The light generation unit 417 may generate light corresponding to the transmission signal, and may output an optical signal to the outside. The light generation unit 417 may generate and output transmission light to the outside.

For example, the light generation unit 417 may output light corresponding to the FMCW signal. In this case, the transmission light may be realized as the FMCW signal.

The light generated by the light generation unit 417 may be a laser.

Meanwhile, the transmission unit 410 may further include an amplifier (not shown). The amplifier (not shown) may include an amplification circuit. The amplifier (not shown) may amplify a signal generated by the waveform generator 411, and may provide the amplified signal to the modulator 414.

The reception unit 410 may include a photo detector 421 and a mixer 424.

The photo detector 421 may convert reception light into an electrical signal. The photo detector 421 may receive a reflection light signal formed as the result of an optical signal output by the transmission unit 410 being reflected by an object, and may convert the received reflection light signal into an electrical signal.

The mixer 424 may correlatively calculate a signal generated by the waveform generator 411 and a signal received by the photo detector 421, and may output the difference between the two signals.

For example, the mixer 424 may generate information about a TOF corresponding to the time difference between a transmission signal output by the transmission unit 410 and a reception signal received by the reception unit 420.

In another example, the mixer 424 may mix a transmission signal generated by the waveform generator 411 and a reception signal received by the photo detector 421, and may generate a signal corresponding to the difference in frequency between the transmission signal and the reception signal.

The frequency of a signal acquired from the transmission signal and the reception signal may be referred to as a beat frequency. The frequency output from the mixer 424 may be a beat frequency.

The processor 470 may acquire information about the object based on the difference in frequency between the transmission signal and the reception signal.

Meanwhile, the reception unit 420 may further include a filter (not shown) and an amplifier (not shown).

The filter (not shown) may filter a signal generated by the mixer 424.

The amplifier (not shown) may amplify a signal that is generated by the mixer 424 or a signal that is generated by the mixer 424 and filtered by the filter (not shown), and may provide the amplified signal to the processor 470.

The processor 470 may include a Fast Fourier Transform (FFT) unit 471, a processing unit 474, and a Digital to Analog Converter (DAC) unit 477.

In the case in which a transmission signal and a reception signal are FMCW signals, the FFT unit 471 may measure the frequency of a signal output from the mixer 424 through fast Fourier transform. The FFT unit 471 may generate information about phase shift through fast Fourier transform of a signal corresponding to the difference in frequency between the transmission signal and the reception signal.

In some embodiments, the FFT unit 471 may be omitted.

The processing unit 474 may acquire information about an object. The processing unit 474 may acquire information about an object based on the difference between the transmission signal and the reception signal, the difference which is provided by the mixer 424.

The processing unit 474 may acquire information about an object based on TOF or phase shift.

The processing unit 474 may acquire information about an object based on information about TOF provided by the mixer 424.

The processing unit 474 may acquire information about an object based on information about PS.

Information about an object may include information about whether or not an object is present, information about the distance to an object, information about the speed relative to an object, and information about the location of an object.

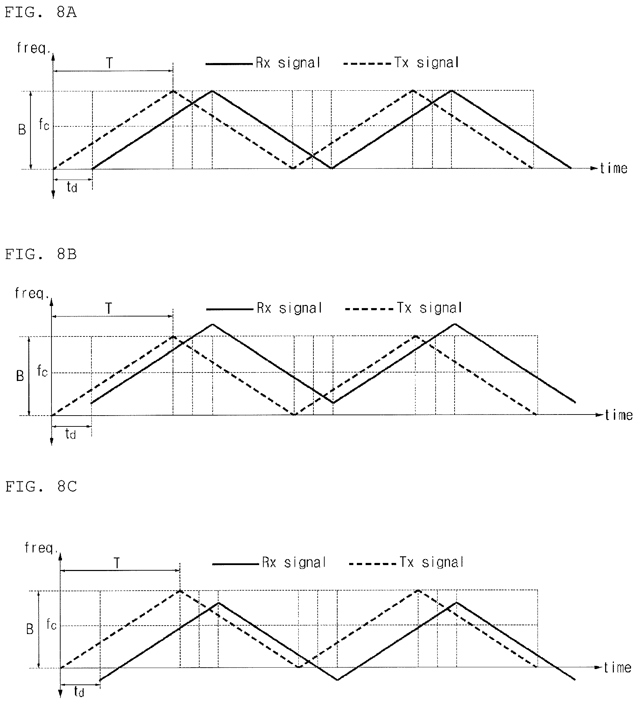

Hereinafter, the operation of acquiring object information in the case where a transmission signal and a reception signal are FMCW signals will be described with reference to FIGS. 8A to 8C.

FIGS. 8A to 8C are views showing a transmission frequency and a reception frequency according to an embodiment of the present invention.

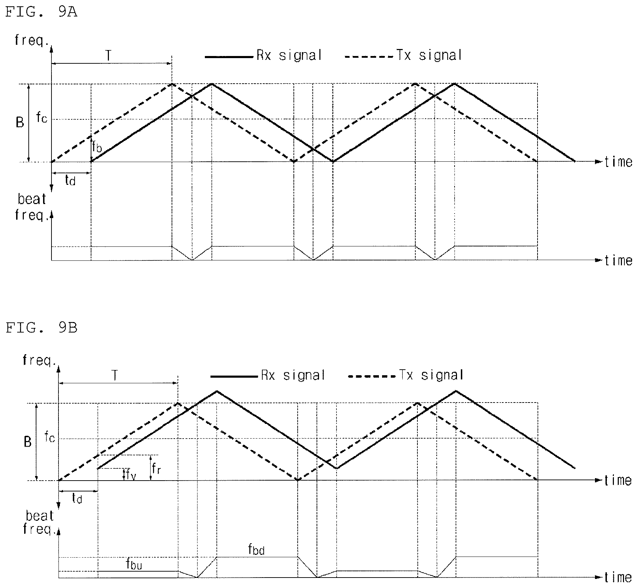

FIGS. 9A and 9B are reference views for explanation of a beat frequency according to an embodiment of the present invention.

The operation of acquiring object information will be described with reference to FIGS. 8A to 9B.

FIGS. 8A to 8C are views showing the relationship between the frequency of a transmission signal (hereinafter, referred to as a transmission frequency) and the frequency of a reception signal (hereinafter, referred to as a reception frequency) on a time axis. FIG. 8A shows the case in which an object is stationary, FIG. 8B shows the case in which an object approaches the lidar apparatus, and FIG. 8C shows the case in which an object becomes distant from the lidar apparatus.

In FIGS. 8A to 8C, td indicates a delay time between a transmission signal and a reception signal, which is set based on the distance between an object and the lidar apparatus.

FIGS. 9A and 9B are views showing the relationship between the frequency of a transmission signal and the frequency of a reception signal and a beat frequency acquired therefrom on a time axis. FIG. 9A shows the same static situation as in FIG. 8A, and FIG. 9B shows the same dynamic situation as in FIG. 8B. The beat frequency fb is the difference between the transmission frequency and the reception frequency.

In the static situation shown in FIG. 9A, the beat frequency may be set based on a delay time due to the distance between the object and the lidar apparatus.

In the dynamic situation shown in FIG. 9B, the relative speed between the object and the lidar apparatus is changed, with the result that a Doppler frequency shift phenomenon occurs. Consequently, the beat frequency is a combination of a range beat frequency fr and a Doppler frequency fd.

The beat frequency includes an up-beat frequency, which corresponds to an up chirp, and a down-beat frequency, which corresponds to a down chirp.

The up-beat frequency and the down-beat frequency each include a frequency shift component caused due to the distance to a target that is moving and the speed relative to the target. These components are referred to as a range beat frequency and a Doppler frequency.

Meanwhile, the up-beat frequency may be expressed as the sum of the range beat frequency and the Doppler frequency, and the down-beat frequency may be expressed as the difference between the range beat frequency and the Doppler frequency.

Meanwhile, a Doppler frequency having a negative value means that the object is approaching the lidar apparatus 400, and a Doppler frequency having a positive value means that the object is moving away from the lidar apparatus 400.

The processing unit 474 of the processor 470 may calculate the distance to the object and the speed relative to the object using the range beat frequency and the Doppler frequency.

Referring back to FIG. 4, the DAC unit 477 may convert a digital signal into an analog signal. The converted analog signal may be input to the waveform generator 411.

Meanwhile, the lidar apparatus 400 further includes an optical splitter 510, a wave guide unit 520, a beam steering unit 530, and preferably a lens system 540.

The optical splitter 510 may split transmission light.

The wave guide unit 520 may be disposed between the light generation unit 417 and the beam steering unit 530 (not being part of the claimed subject-matter).

The wave guide unit 520 may guide the transmission light, output by the light generation unit 417, to the beam steering unit 530.

The waveguide unit 520 may include a core that is in a cladding structure of silicon nitride (Si3N4) and silicon dioxide (SiO2).

The wave guide unit 520 may include a plurality of cores. Each of the cores may be in a cladding structure of silicon nitride (Si3N4) and silicon dioxide (SiO2). The wave guide unit 520 may guide light split by the optical splitter 510 to the beam steering unit 530 through the cores.

The wave guide unit 520 may guide reflection light to the photo detector 421

The beam steering unit 530 may steer light. The beam steering unit 530 may perform beam steering by outputting light, the optical phase of which is changed by the heater 482 or the piezoelectric unit 484.

The lens system 540 may change the path of light steered by the beam steering unit 530. The lens system 540 may set the field of view (FOV) of the lidar apparatus 400 based on the refractive index thereof.

FIG. 5 is a reference block diagram for explanation of transmission light and reception light according to an embodiment of the present invention.

Referring to FIG. 5, laser light generated by the light generation unit 417 may be introduced into the optical splitter 510.

The optical splitter 510 may split the laser light into a plurality of beams. The split beams of the laser light may be guided by the wave guide unit 520, and may be introduced into the beam steering unit 530.

In some embodiments, the optical splitter 510 may change the phases of the split beams of the laser light. The phase-changed beams of the laser light may be provided to the beam steering unit 530.

The wave guide unit 520 may include a plurality of cores. Each of the cores may be in a cladding structure of silicon nitride (Si3N4) and silicon dioxide (SiO2).

Meanwhile, the heater 482 (see FIG. 3) may provide heat to the wave guide unit 520. The optical phases of the beams guided by the wave guide unit 520 may be changed by the heat provided from the heater 482. Specifically, the refractive index of the wave guide unit 520 may be changed by the heat provided from the heater 482, and the optical phases of the beams guided by the wave guide unit 520 may be changed by the changed refractive index of the wave guide unit 520.

The processor 470 may control the heater 482 so that the optical phases of the beams guided by the wave guide unit 520 are changed.

Meanwhile, the piezoelectric unit 484 (see FIG. 3) may apply pressure to the wave guide unit 520. The optical phases of the beams guided by the wave guide unit 520 may be changed by the pressure applied from the piezoelectric unit 484. Specifically, the refractive index of the wave guide unit 520 may be changed by the pressure applied from the piezoelectric unit 484, and the optical phases of the beams guided by the wave guide unit 520 may be changed by the changed refractive index of the wave guide unit 520.

The processor 470 may control the piezoelectric unit 484 so that the optical phases of the beams guided by the wave guide unit 520 are changed.

Meanwhile, the optical phases of the beams may be changed differently. The optical phase-changed beams may be introduced into the beams steering unit 530. The beam steering unit 530 may condense the beams introduced thereinto. Since the beams have different optical phases, the condensed beams may be steered based on the respective optical phases of the beams.

The light steered by the beam steering unit 530 may be output to the lens system 540.

The light passes through the lens system 540, and is then reflected by an object O.

The light reflected by the object O may be introduced into the photo detector 421 via the beam steering unit 530 and the wave guide unit 520.

Meanwhile, the processor 470 may steer the light output from the beam steering unit 530 through the heater 482 or the piezoelectric unit 484.

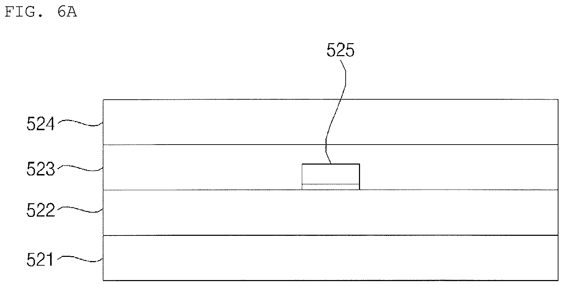

FIG. 6A is a reference view illustrating a wave guide unit according to an embodiment of the present invention.

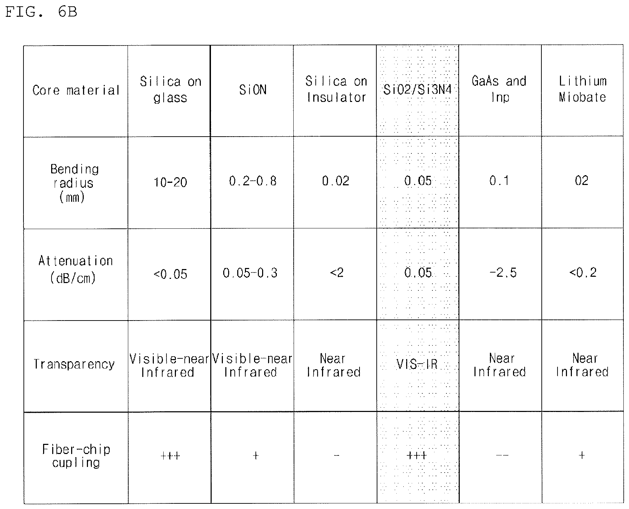

FIG. 6B is a reference view for explanation of the effects of the wave guide unit according to the embodiment of the present invention.

FIG. 6A shows an example in which the wave guide unit 520 includes a single core 525. Alternatively, the wave guide unit 520 may include a plurality of cores, as previously described.

Referring to FIG. 6A, the wave guide unit 520 may include a substrate 521, a first silicon dioxide layer 522 formed on the substrate 521, a second silicon dioxide layer 523 formed on the first silicon dioxide layer 522, a core 525 formed in the second silicon dioxide layer 523, and a third silicon dioxide layer 524 formed on the second silicon dioxide layer 523.

The substrate 521 may be a silicon substrate.

The first silicon dioxide layer 522 may be a thermal silicon dioxide (SiO2) layer.

The second silicon dioxide layer 523 may be a low pressure chemical vapor deposition (LPCVD) silicon dioxide (SiO2) layer.

The core 525 may be formed in the second silicon dioxide layer 523. The core 525 may be in a cladding structure of silicon nitride (Si3N4) and silicon dioxide (SiO2).

The third silicon dioxide layer 524 may be a plasma enhanced chemical vapor deposition (PECVD) silicon dioxide (SiO2) layer.

FIG. 6B shows experimental results with respect to the bending radius, attenuation, applicable beam wavelength, and fiber-chip coupling when the core is made of various kinds of materials.

Referring to FIG. 6B, in the case in which the core 525 (see FIG. 6A) is in a cladding structure of silicon nitride (Si3N4) and silicon dioxide (SiO2), the bending radius of the core 525 may be 0.05 mm. The smaller the bending radius of the core 525 is, the more the wave guide unit may be miniaturized and integrated. In the case in which the core 525 is in a cladding structure of silicon nitride (Si3N4) and silicon dioxide (SiO2), the core 525 may be miniaturized and integrated more than cores made of other different materials.

In the case in which the core 525 is in a cladding structure of silicon nitride (Si3N4) and silicon dioxide (SiO2), the loss ratio of the core 525 per unit length (cm) is 0.05 dB, which is lower than the loss ratios of cores made of other different materials. Since the loss ratio of the core 525 is low in the case in which the core 525 is in a cladding structure of silicon nitride (Si3N4) and silicon dioxide (SiO2), the wave generation unit may be configured using a light source having a small output. In addition, the core 525 may have high energy efficiency.

In the case in which the core 525 is in a cladding structure of silicon nitride (Si3N4) and silicon dioxide (SiO2), light ranging from visible light to infrared light may be used as transmission light. Visible light from the lidar apparatus must not be introduced into the eyes of a pedestrian or a driver of a nearby vehicle. For this reason, the core 525 in a cladding structure of silicon nitride (Si3N4) and silicon dioxide (SiO2) is used to emit infrared light, the wavelength of which is long.

In the case in which the core 525 is in a cladding structure of silicon nitride (Si3N4) and silicon dioxide (SiO2), the characteristics of coupling between a chip and a fiber array are excellent.

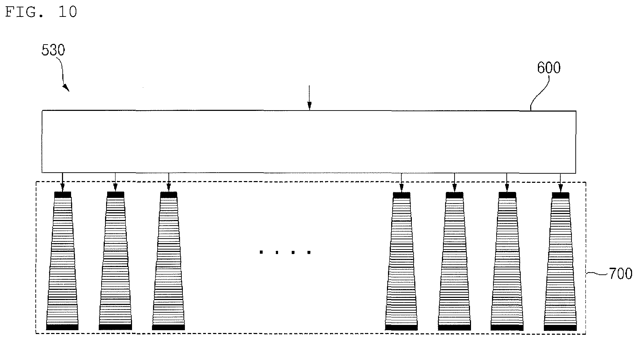

FIG. 10 is a reference view for explanation of a beam steering unit according to an embodiment of the present invention.

Referring to FIG. 10, the beam steering unit 530 includes a first beam steering unit 600, and a second beam steering unit 700.

The first beam steering unit 600 may steer a beam in a first direction. Here, the first direction may be a horizontal direction. For example, the first direction may be an overall width direction or an overall length direction of the vehicle 100.

The first beam steering unit 600 includes an AWG. In this case, the first beam steering unit 600 may steer a beam in the first direction through the AWG.

The second beam steering unit 700 may steer a beam in a second direction. The second direction may be a vertical direction. For example, the second direction may be an overall height direction of the vehicle 100.

The second beam steering unit 700 includes a grating coupler. The grating coupler may be referred to as A-grating. The second beam steering unit 700 may steer a beam in the second direction through the grating coupler.

The second beam steering unit 700 may include an AWG. In this case, the second beam steering unit 700 may steer a beam in the second direction through the AWG.

FIGS. 11A to 11D are reference views for explanation of the first beam steering unit according to an embodiment of the present invention.

FIG. 11A is a conceptual diagram illustrating of the first beam steering unit according to an embodiment of the present invention.

Referring to FIG. 11 A, the first beam steering unit 600 includes an optical splitter 510, a wave guide unit 520, and a Free Propagation Region (FPR) 610.

The optical splitter 510 may split light introduced thereinto. The optical splitter 510 may be a star coupler.

The wave guide unit 520 may guide light split by the optical splitter 510. The wave guide unit 520 may guide the split light toward the FPR 610.

The heater 482 may provide heat to the wave guide unit 520 based on a received electrical signal in order to change the individual phases of beams of the split light.

Due to the heat provided by the heater 482, the individual phases of beams of the split light guided through the wave guide unit 520 may be changed. Temperature of the heat determines the degree of change in the individual phase of beams of the split light. As the individual phases of beams of the split light are changed, a path from which the light is to output through the FPR 610 may be changed.

The FPR 610 may combine the split light and output the combined light to the outside. The FPR 610 may be a star coupler.

Meanwhile, reference numeral 611 indicates various paths of light output from the FPR 610.

Meanwhile, the first beam steering unit 600 may be referred to as an optical switch.

Meanwhile, configuration including the optical splitter 510, the wave guide unit 520, and the FPR 610 is referred to as an AWG.

Referring to FIG. 11B, the lidar apparatus 400 may further include a lens system 540.

The beam steering unit 530 may include an optical switch 1110. For example, the optical switch 1110 may be an AWG.

The optical switch 1110 is an optical element which enables selecting a light travel path in accordance with an electrical signal applied by the processor 470.

The processor may adjust an optical path by controlling the optical switch 1110. The processor 470 may provide an electrical signal to the optical switch 1110. Here, in accordance with the provided electrical signal, the optical switch 1110 may emit light at a specific point (one of 1110a and 1110g) in front of the lens system 540. The point of light emission is changed by an electrical signal applied to the optical switch 1110, with the result that a path of a beam output through the lens system 540 is changed. The processor 470 may change the electrical signal applied to the optical switch 1110 so as to steer a beam to be output. The processor 470 may change the overall field of view by changing a range of steering variations. Meanwhile, the output beam may be called transmission light.

Referring to FIG. 11C, an emission angle changed by the optical switch 1110 may be acquired as represented in Equation 1. $θ = {tan}^{- 1} \left(\frac{Δx}{f}\right)$

Where Δx indicates the change in position of a light emission point through the optical switch 1110, f indicates the focal length of the lens system 540, and θ indicates an emission angle.

Referring to FIG. 11D, in the case where the focal length of the lens system 540 is 5.0mm, the emission angle θ is changed depending on the change Δx of the light emission point, as shown in the graph.

FIG. 11E is a reference view for explanation of an emission angle according to an embodiment of the present invention, the emission angle which is changed by heat applied to a wave guide unit.

Referring to FIG. 11E, transmission light is split by the optical splitter 510 into Na number of beams. In this case, the wave guide unit 520 may include Na number of optical paths.

An emission angle may be acquired as represented in Equation 2. $θ = arcsin \left(h/d\right) \approx h / d$

Where θ indicates an emission angle, λ indicates a wavelength of light, Nr indicates the refractive index of an FPR, **Δϕ** indicates the phase difference between adjacent individual optical paths of the wave guide unit 520, and d indicates the distance of the adjacent individual optical paths of the wave guide unit 520 to each other.

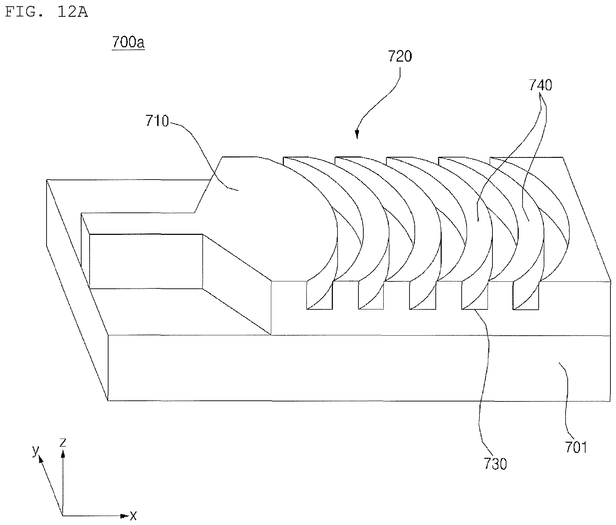

FIGS. 12A to 12D are reference views for explanation of the second beam steering unit according to an embodiment of the present invention.

The second beam steering unit 700 includes a grating coupler 700a. The second beam steering unit 700 includes a plurality of grating couplers that are arranged to respectively correspond to a plurality of output optical paths of the first beam steering unit 600.

FIG. 12A is a diagram illustrating an example of a single grating coupler according to an embodiment of the present invention.

Referring to FIG. 12A, a grating coupler 700a may include a transition region 710 and a grating region 720.

The transition region 710 may be tapered in the grating region 720. The transition region 710 may be formed such that the more distant the transition region 710 from the grating region 720, the narrower the transition region is.

One end of the transition region 710 may be connected to the first beam steering unit 600. The other end of the transition region 710 may be connected to the grating region 720.

The grating region 720 may include a plurality of lines 740, and a plurality of grooves 730 distinguishing the plurality of lines 740.

Each of the lines 740 may be convex in a direction of transmission light. Alternatively, each of the lines 740 may be concave in a direction of reflection light.

The transmission region 710 and the grating region 720 may be arranged on the substrate 701.

The transition region 710 and the grating region 720 may be made of a material having the refractive index greater than that of the substrate 701.

Meanwhile, the substrate 710 and the substrate 521 of the wave guide unit 520 may be integrated as one body.

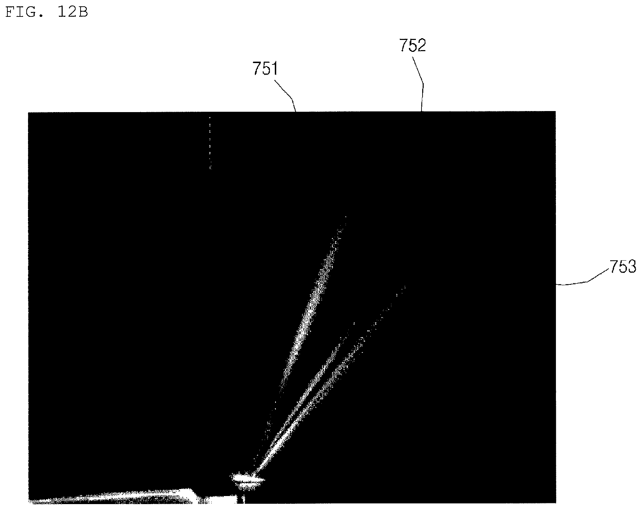

FIG. 12B is a reference diagram for explanation of an emission angle of a beam, which is changed by a grating coupler, according to an embodiment of the present invention

Referring to FIG. 12B, a grating coupler 700a may change an emission angle of a beam according to a wavelength of transmission light.

The processor 470 may adjust a wavelength of light generated by the light generation unit 417. In the case where the wavelength of light generated by the light generation unit 417 is changed, an emission light of a beam output through the grating coupler 700a to the outside is changed.

For example, in the case where the light generation unit 417 outputs light at a first wavelength under the control of the processor 470, the grating coupler 700a may output a beam 751 at a first emission angle.

In another example, in the case where the light generation unit 417 outputs light at a second wavelength under the control of the processor 470, the grating coupler 700a may output a beam 752 at a second emission angle.

In yet another example, in the case where the light generation unit 417 output light at a third wavelength under the control of the processor 470, the grating coupler 700a may output a beam 753 at a third emission angle.

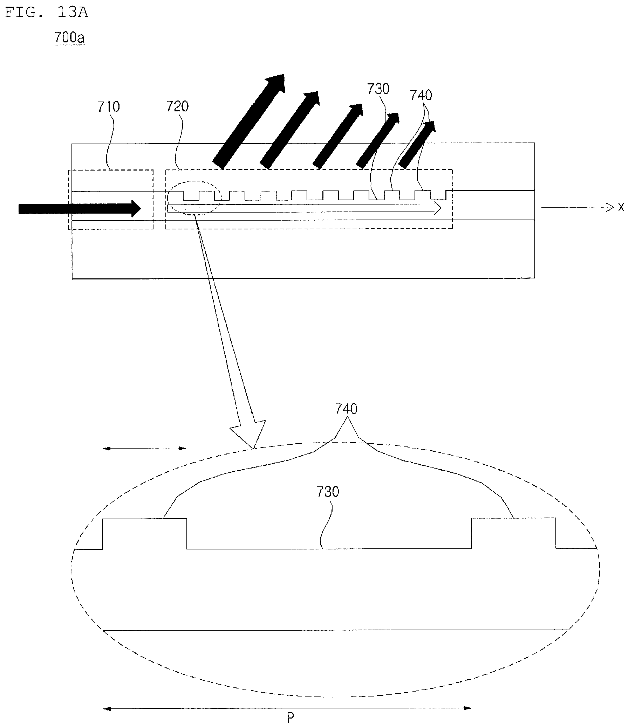

FIGS. 13A to 13C are reference diagrams for explanation of a gratin coupler according to an embodiment of the present invention.

FIGS. 13A to 13C are side views of a grating coupler according to an embodiment of the present invention.

Referring to FIG. 13A, a grating region 720 of the grating coupler 700a includes a plurality of lines and a plurality of grooves 730 which distinguish the plurality of lines 740.

The grating coupler 700a may include a plurality of periods P. Each of the periods P includes one line 740 and one groove 730.

Each of the periods P may have a duty cycle that is a ratio between the line 740 and the groove 730. Specifically, the duty cycle is the length of the line 740 divided by the length of the period P.

As shown in FIG. 13A, in the case where the plurality of periods P each has a constant duty cycle, intensity of beams to be output increases in proportion to proximity to the transition region 710. That is, intensity of beams to be output decreases in proportion to distance from the transition region 710. It is because light is continuously output once it is propagated. In this case, intensity of a beam steered in the second direction is not constant. If a beam of inconsistent intensity is output, it is not possible to detect an object accurately.

The grating coupler 700a according to an embodiment of the present invention may include a plurality of period P having different duty cycles.

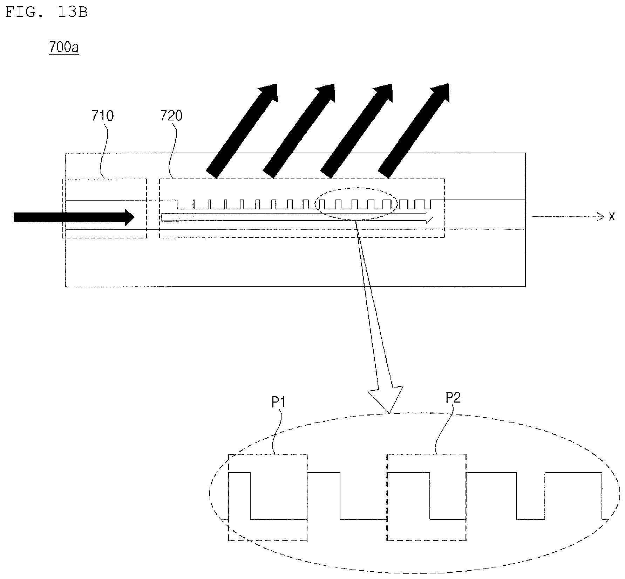

As shown in FIG. 13B, the grating coupler 700a may be formed to enable a steered beam to have constant intensity.

Specifically, a period P may have a smaller duty cycle in proportion to proximity to the transition region 710. In addition, a period P may have a greater duty cycle in proportion to distance from the transition region 710.

For example, the plurality of periods P may include a first period P1 and a second period P2. The second period P2 may be more distant from the light generation unit 410 than the first period P1. Alternatively, the second period P2 may be more distant from the transition region 710 than the first period P1. In this case, the first period P1 may have a duty cycle smaller than that of the second period P2.

By forming the periods P to have a duty cycle as described above, the grating coupler 700a may enable a steered beam to have constant intensity.

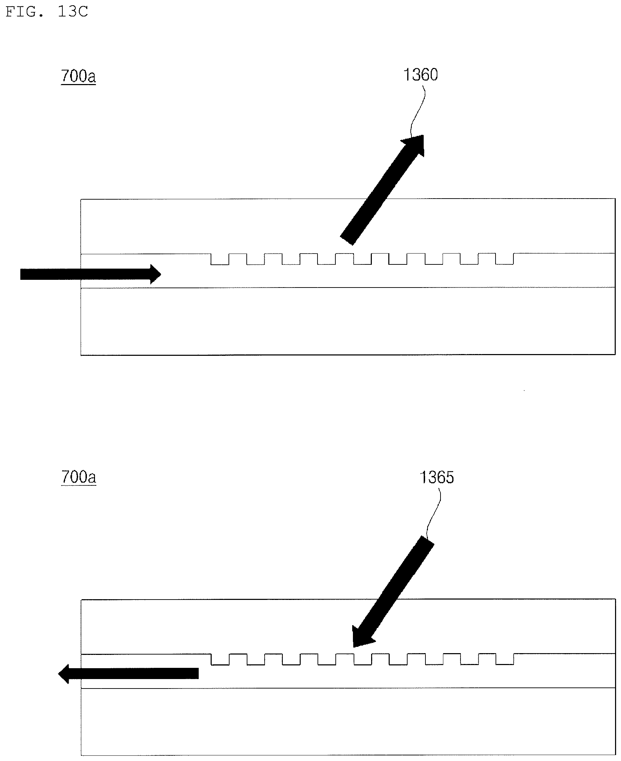

As shown in FIG. 13C, the grating coupler 700a may not just output a beam 1360, but receive reflection light 1365. In this case, the grating coupler 700a may be classified not just as a sub-component of the transmission unit 410, but as a sub-component of the reception unit 420.

The reflection light 1365 may be transferred through the grating coupler 700a and the AWG 600 to the photo detector 417. In this case, the grating coupler 700a and the AWG 600 may be classified not just as sub-components of the transmission unit 410, but as sub-components of the reception unit 420.

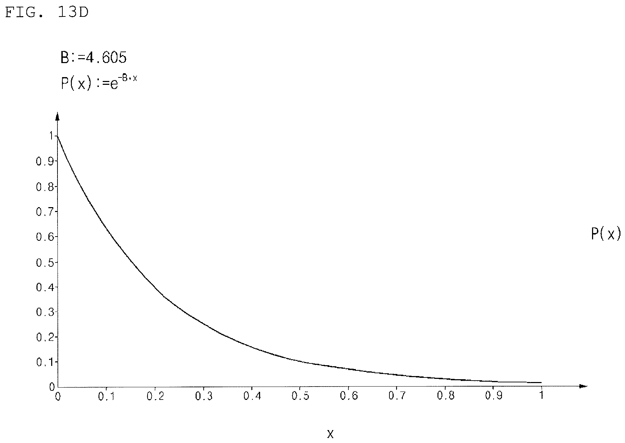

FIGS. 13D to 13F are reference diagrams for explanation of the relationship between a duty cycle and intensity of a beam according to an embodiment of the present invention.

FIGS. 13A to 13F are results from computer simulation.

FIG. 13D shows a decay rate P(x) depending on a grating location (x) of the grating coupler 700a in the case were B is a constant. The decay rate P(x) is an exponential function. For constant intensity of beam at any grating location (x), the function of the decay rate P(x) needs to be a linearly decreasing function.

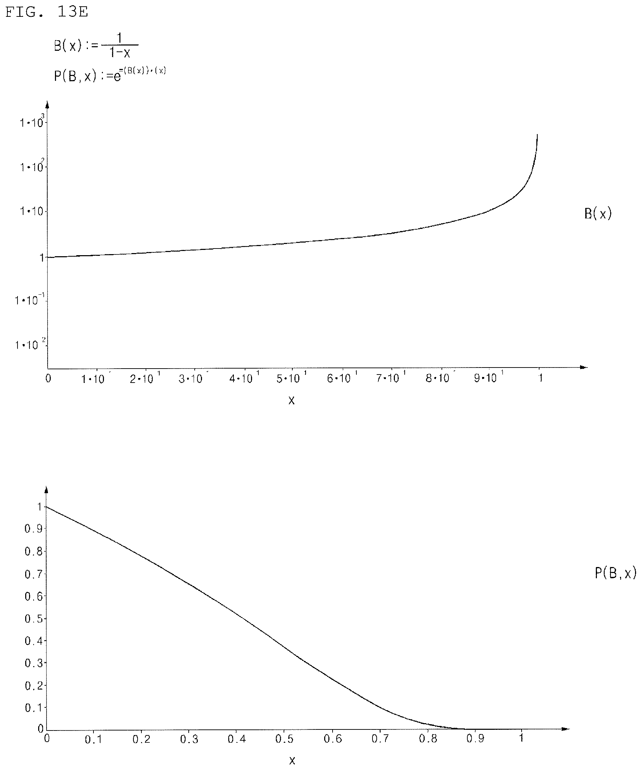

FIG. 13E shows a decay rate P(x) depending on a grating location (x) of the grating coupler 700a in the case where B is changed at each grating location (x). In this case, the decay rate P(x) is a linearly decreasing function, and thus, intensity of a beam is maintained constant.

B is determined by Equation 2 as below: $\begin{matrix}h = λ * Δφ / 2 πNr \\ ⋅ λ is wavelength \\ ⋅ Nr is refractive index in FPR \\ θ = arcsin \left(h/d\right) \approx h / d\end{matrix}$

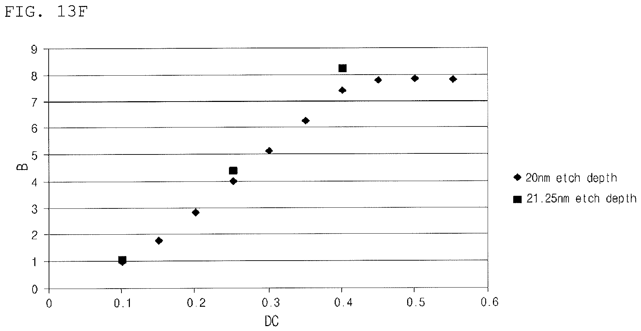

FIG. 13F shows values of B depending to a duty cycle. If a duty cycle suitable for a value of B is changed at each grating location, the decay rate P(x) linearly decreases.

An etch depth is the distance between a line and a groove on the Z-axis.

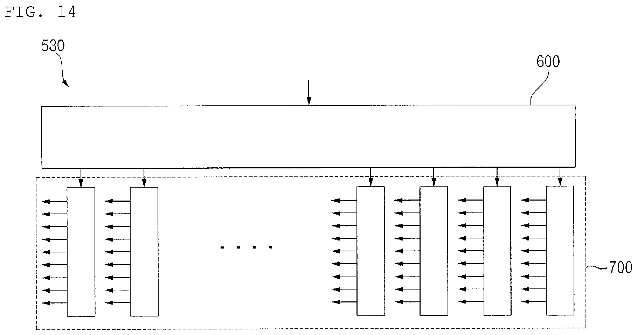

FIG. 14 is a reference diagram for explanation of a beam steering unit according to an embodiment of the present invention.

Referring to FIG. 14, the second beam steering unit 700 may include an AWG.

In the case where the first beam steering unit 600 includes an AWG, the second beam steering unit 700 may include a plurality of AWGs which are arranged to respectively correspond to a plurality of output optical paths of the AWG of the first steering unit 600.

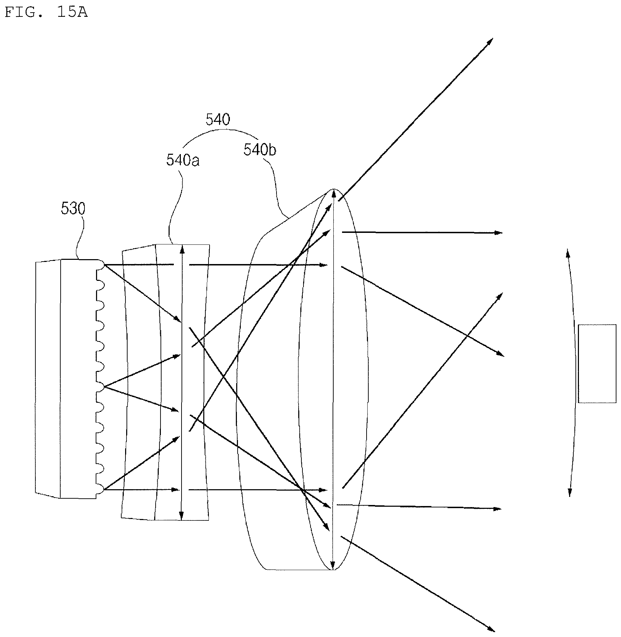

FIGS. 15A to 15B are reference diagrams for explanation of a lens system according to an embodiment of the present invention.

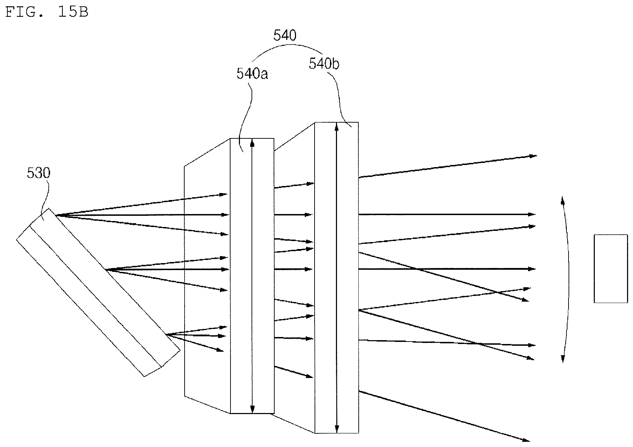

FIG. 15A is a top view of a lens system, and FIG. 15B is a side view of the lens system.

The lidar apparatus 400 may include a lens system 540. The lens system 540 may change paths of beams steered in the first direction and the second direction.

The lens system 540 may change a first-direction beam path, while maintaining a second-direction beam path. For example, the lens system 540 may include a lens in the shape of cylinder. Through the cylinder-shaped lens, a horizontal-direction beam path may be changed, whereas a vertical-direction beam path is maintained.

As shown in FIGS. 15A and 15B, the lens system 540 may include a first lens 540a and a second lens 540b.

The first lens 540a may be concave in the first direction. Here, the first direction may be a vertical direction. Alternatively, the first direction may be an overall width direction or an overall length direction. For example, the first lens 540a may be concave as seen from the top. The first lens 540a may be flat as seen from the side.

The second lens 540b may be convex in a first direction. Here, the first direction may be a horizontal direction. Alternatively, the first direction may be an overall width direction or an overall length direction. For example, the second lens 540b may be convex as seen from the top. The second lens 540b may be flat as seen from the side.

Thus, the above detailed description should not be construed as being limited to the embodiments set forth herein in all terms, but should be considered by way of example. The scope of the present invention should be determined by the reasonable interpretation of the accompanying claims.

## Claims

1. A lidar apparatus (400) for vehicles, comprising:
a transmission unit (410) configured to output a beam, wherein the transmission unit comprises:
a light generation unit (417) configured to generate transmission light that contains the beam;
a first beam steering unit (600) configured to steer the beam in a first direction; and
a second beam steering unit (700) configured to steer the beam in a second direction which is perpendicular to the first direction;
a reception unit (420) configured to acquire reflection light formed as a result of the beam being reflected by an object; and
a processor (470) configured to
generate information about the object based on the reflection light, and
control at least one of the first beam steering unit (600) or the second beam steering unit (700) to adjust an angle of beam steering of the transmission light based on the generated information about the object,
wherein the first beam steering unit (600) comprises an Arrayed Waveguide Grating, AWG, wherein the AWG comprises:
an optical splitter (510) configured to split the transmission light,
a Free Propagation Region, FPR, (610) configured to combine the split light and output the combined light, and
a wave guide unit (520) configured to guide the split light to the FPR (610),
wherein the transmission unit comprises: at least one of a heater (482) and a piezoelectric unit (484),
wherein the heater (482) is configured to provide heat to the wave guide unit (520) based on an electrical signal to change individual phases of beams of the split light,
wherein the piezoelectric unit (484) is configured to apply pressure to the wave guide unit (520) to change individual phases of beams of the split light, and
wherein the second beam steering unit (700) comprises a plurality of grating couplers (700a) which are arranged to respectively correspond to a plurality of output optical paths of the AWG, wherein each of the plurality of grating couplers (700a) comprises:
a grating region (720) including a plurality of lines (740) and a plurality of grooves (730) distinguishing the plurality of lines, and
a transition region (710) being formed such that the more distant the transition region from the grating region, the narrower the transition region is, wherein one end of the transition region is connected to the first beam steering unit and other end of the transition region is connected to the grating region,
wherein each of the plurality of grating couplers (700a) is configured to change an emission angle of the beam when the processor (470) adjusts a wavelength of the transmission light.

2. The lidar apparatus (400) according to claim 1, wherein each of the plurality of grating couplers (700a) changes an emission angle of the beam according to the wavelength of the transmission light.

3. The lidar apparatus according to claim 1, wherein each of the plurality of grating couplers (700a) comprises a plurality of periods each formed by one line of the plurality of lines and one groove of the plurality of grooves.

4. The lidar apparatus according to claim 3, wherein each of the plurality of the periods has a duty cycle that is a ratio between the line and the groove, wherein preferably the plurality of periods comprises a first period and a second period which is more distant from the light generation unit (417) than the first period, a first duty cycle of the first period being smaller than a second duty cycle of the second period.

5. The lidar apparatus (400) according to claim 1, wherein the transmission light is a Frequency Modulated Continuous Wave, FMCW.

## Patentansprüche

1. Lidar-Vorrichtung (400) für Fahrzeuge, umfassend:
eine Sendeeinheit (410), die zur Ausgabe eines Strahls konfiguriert ist, wobei die Sendeeinheit umfasst:
eine Lichterzeugungseinheit (417), die so konfiguriert ist, dass sie Sendelicht erzeugt, das den Strahl enthält;
eine erste Strahllenkeinheit (600), die so konfiguriert ist, dass sie den Strahl in eine erste Richtung lenkt; und
eine zweite Strahllenkeinheit (700), die so konfiguriert ist, dass sie den Strahl in eine zweite Richtung lenkt, die senkrecht zur ersten Richtung verläuft;
eine Empfangseinheit (420), die so konfiguriert ist, dass sie Reflexionslicht erfasst, das als Ergebnis des von einem Objekt reflektierten Strahls gebildet wird; und
einen Prozessor (470), der so konfiguriert ist, dass er
Informationen über das Objekt auf der Grundlage des reflektierten Lichts erzeugt und
mindestens eine der ersten Strahllenkeinheit (600) oder der zweiten Strahllenkeinheit (700) steuert, um einen Winkel der Strahllenkung des Sendelichts auf der Grundlage der erzeugten Informationen über das Objekt einzustellen,
wobei die erste Strahllenkeinheit (600) ein Arrayed Waveguide Grating, AWG, umfasst, wobei das AWG umfasst:
einen optischen Splitter (510), der so konfiguriert ist, dass er das Sendelicht aufteilt,
einen freien Ausbreitungsbereich, FPR, (610), der so konfiguriert ist, dass er das geteilte Licht kombiniert und das kombinierte Licht ausgibt, und
eine Wellenleitereinheit (520), die so konfiguriert ist, dass sie das geteilte Licht zum FPR (610) leitet,
wobei die Sendeeinheit umfasst: mindestens eine Heizung (482) und eine piezoelektrische Einheit (484),
wobei die Heizung (482) so konfiguriert ist, dass sie der Wellenleitereinheit (520) auf der Grundlage eines elektrischen Signals Wärme zuführt, um einzelne Phasen der Strahlen des geteilten Lichts zu ändern,
wobei die piezoelektrische Einheit (484) so konfiguriert ist, dass sie Druck auf die Wellenleitereinheit (520) ausübt, um einzelne Phasen von Strahlen des geteilten Lichts zu ändern, und
wobei die zweite Strahllenkeinheit (700) eine Mehrzahl von Grating-Kopplern (700a) umfasst, die so angeordnet sind, dass sie jeweils einer Mehrzahl von optischen Ausgangswegen des AWG entsprechen, wobei jeder der Mehrzahl von Grating-Kopplern (700a) umfasst:
einen Grating-Bereich (720) mit einer Mehrzahl von Linien (740) und einer Mehrzahl von Rillen (730), die die Mehrzahl von Linien unterscheiden, und
einen Übergangsbereich (710), der so ausgebildet ist, dass der Übergangsbereich umso schmaler ist, je weiter er von dem Grating-Bereich entfernt ist, wobei ein Ende des Übergangsbereichs mit der ersten Strahllenkeinheit verbunden ist und ein anderes Ende des Übergangsbereichs mit dem Grating-Bereich verbunden ist,
wobei jeder der Mehrzahl von Grating-Kopplern (700a) so konfiguriert ist, dass er einen Emissionswinkel des Strahls ändert, wenn der Prozessor (470) eine Wellenlänge des Sendelichts einstellt.

2. Lidar-Vorrichtung (400) nach Anspruch 1, wobei jeder der Mehrzahl von Grating-Kopplern (700a) einen Emissionswinkel des Strahls in Abhängigkeit von der Wellenlänge des Sendelichts ändert.

3. Lidar-Vorrichtung nach Anspruch 1, wobei jeder der Mehrzahl von Grating-Kopplern (700a) mehrere Perioden umfasst, die jeweils durch eine Linie der Mehrzahl von Linien und eine Rille der Mehrzahl von Rillen gebildet werden.

4. Lidar-Vorrichtung nach Anspruch 3, wobei jede der mehreren Perioden ein Tastverhältnis hat, das ein Verhältnis zwischen der Linie und der Rille ist, wobei vorzugsweise die mehreren Perioden eine erste Periode und eine zweite Periode umfassen, die weiter von der Lichterzeugungseinheit (417) entfernt ist als die erste Periode, wobei ein erstes Tastverhältnis der ersten Periode kleiner ist als ein zweites Tastverhältnis der zweiten Periode.

5. Lidar-Vorrichtung (400) nach Anspruch 1, wobei das Sendelicht eine frequenzmodulierte kontinuierliche Welle, FMCW, ist.

## Revendications

1. Appareil lidar (400) destiné à un véhicule, comprenant:
une unité de transmission (410) conçue pour émettre un faisceau, l'unité de transmission comprenant:
une unité de génération de lumière (417) conçue pour émettre une lumière de transmission qui contient le faisceau;
une première unité de guidage de faisceau (600) conçue pour guider le faisceau dans une première direction; et
une deuxième unité de guidage de faisceau (700) conçue pour guider le faisceau dans une deuxième direction perpendiculaire à la première direction;
une unité de réception (420) conçue pour acquérir la lumière de réflexion formée à la suite de la réflexion du faisceau par un objet; et
un processeur (470) configuré pour
générer des informations concernant l'objet sur la base de la lumière de réflexion, et
amener au moins l'une parmi la première unité de guidage de faisceau (600) ou le seconde unité de guidage de faisceau (700) à ajuster un angle de direction du faisceau de la lumière de transmission sur la base des informations générées concernant l'objet,
dans lequel la première unité de guidage de faisceau (600) comprend un réseau sélectif planaire, AWG, dans lequel l'AWG comprend:
un séparateur optique (510) conçu pour diviser la lumière de transmission,
une région de propagation libre, FPR, (610) conçue pour combiner la lumière divisée et émettre la lumière combinée, et
une unité de guidage d'ondes (520) conçue pour guider la lumière divisée vers la FPR (610),
dans lequel l'unité de transmission comprend: au moins un élément parmi un élément chauffant (482) et une unité piézoélectrique (484),
dans lequel l'élément chauffant (482) est conçu pour fournir de la chaleur à l'unité de guidage d'ondes (520) sur la base d'un signal électrique afin de modifier les phases individuelles des faisceaux de la lumière divisée,
dans lequel l'unité piézoélectrique (484) est conçue pour appliquer une pression à l'unité de guidage d'ondes (520) afin de modifier les phases individuelles des faisceaux de la lumière divisée, et
dans lequel la deuxième unité de guidage de faisceau (700) comprend une pluralité de coupleurs à réseau (700a) qui sont disposés de manière à correspondre respectivement à une pluralité de chemins optiques de sortie de l'AWG, dans lequel chacun de la pluralité de coupleurs à réseau (700a) comprend:
une région de réseau (720) comprenant une pluralité de lignes (740) et une pluralité de rainures (730) se distinguant la pluralité de lignes, et
une région de transition (710) formée de telle sorte que plus la région de transition est éloignée de la région à réseau, plus la région de transition est étroite, dans lequel une extrémité de la région de transition est reliée à la première unité de guidage de faisceau et l'autre extrémité de la région de transition étant reliée à la région à réseau,
dans lequel chacun des coupleurs à réseau (700a) est conçu pour modifier un angle d'émission du faisceau lorsque le processeur (470) ajuste une longueur d'onde de la lumière de transmission.

2. Appareil lidar (400) selon la revendication 1, dans lequel chacun des coupleurs à réseau (700a) modifie un angle d'émission du faisceau en fonction de la longueur d'onde de la lumière de transmission.

3. Appareil lidar selon la revendication 1, dans lequel chacun de la pluralité de coupleurs à réseau (700a) comprend une pluralité de périodes formées chacune par une ligne de la pluralité de lignes et une rainure de la pluralité de rainures.

4. Appareil lidar selon la revendication 3, dans lequel chacune de la pluralité de périodes a un facture d'utilisation qui est un rapport entre la ligne et la rainure, dans lequel, de préférence, la pluralité de périodes comprend une première période et une deuxième période qui est plus éloignée de l'unité de génération de lumière (417) que la première période, un premier facteur d'utilisation de la première période étant inférieur à un deuxième facteur d'utilisation de la deuxième période.

5. Appareil lidar (400) selon la revendication 1, dans lequel la lumière de transmission est une onde continue modulée en fréquence, FMCW.
